# EUROPÄISCHE PATENTSCHRIFT

(11) **EP 2 985 155 B1**
(45) Veröffentlichungstag und Bekanntmachung des Hinweises auf die Patenterteilung: **28.06.2017**
(21) Anmeldenummer: 14180912.9
(22) Anmeldetag: 14.08.2014
(51) Int. Cl.: C08L 21/00, B60C 1/00, C08L 23/06

(54) **Kunststoff-ummantelte Mercaptosilan-Wachs-Abmischung**
Plastic-sheathed mercaptosilane wax mixture
Mélange de croissance de mercaptosilane sous gaine plastique

(43) Veröffentlichungstag der Anmeldung: 17.02.2016
(73) Patentinhaber: Evonik Degussa GmbH, 45128 Essen (DE)
(72) Erfinder: Röben, Caren, 50670 Köln (DE); Korch, Andrea, 50933 Köln (DE); Leick, Sabine, 63486 Bruchköbel (DE); Kunowa, Kathrin, 60599 Frankfurt am Main (DE); Tschernjaew, Juri, 63743 Aschaffenburg (DE)

(56) Entgegenhaltungen:
- EP-A2- 1 683 801
- WO-A1-2013/149790
- DE-A1- 2 209 814

## Beschreibung

Die Erfindung betrifft Kunststoff-ummantelte Mercaptosilan-Wachs-Abmischungen, Verfahren zu deren Herstellung, sowie deren Verwendung.

In der Reifenindustrie werden teilweise Schwefelsilane eingesetzt, um in Kombination mit Kieselsäure den Rollwiderstand, das Naßrutschverhalten und den Abriebwiderstand zu verbessern. Die normalerweise eingesetzten Schwefelsilane sind flüssig und müssen deshalb durch vorhergehendes Abwiegen und Einschweißen des Flüssigsilans oder durch eine Flüssigdosierung direkt in den Mischer eingebracht werden. Um eine solch aufwendige Zugabe zu vermeiden, können die Schwefelsilane auf einen Träger aufgezogen werden. Dabei soll der Träger nicht mit dem Schwefelsilan reagieren, d.h. chemisch inert sein, damit die komplette Silanmenge in der Reifenmischung zur Verfügung steht.

Aus EP 1285926, EP 1683801 und EP 1829922 sind Mercaptosilane bzw. polysulfidische Silane mit Polyethergruppen bekannt. Die Silane können auch auf einem organischen Träger aufgezogen sein.

Ferner sind aus KR 850000081 Silan-/Füllstoffabmischungen und aus WO 2013149790 Mercaptosilan/Ruß-Abmischungen bekannt.

Des Weiteren sind aus US 7078551 geblockte Mercaptosilane auf Träger bekannt.

Aus DE 102013203651 sind Mercaptosilan-Polymer-Abmischungen bekannt.

Nachteil der bekannten Mercaptosilan-/Trägerabmischungen ist die Lagerstabilität.

Aufgabe der vorliegenden Erfindung ist es, Mercaptosilane zur Verfügung zu stellen, die eine gute Lagerstabilität und Verarbeitbarkeit aufweisen.

Gegenstand der Erfindung ist eine Kunststoff-ummantelte Mercaptosilan-Wachs-Abmischung, welche dadurch gekennzeichnet ist, dass der Kunststoff der Kunststoffummantelung ausgewählt ist aus der Gruppe Polypropylen, Polyethylen, vorzugsweise LDPE, Ethylenvinylacetat-Copolymer oder Mischungen der vorgenannten Kunststoffe mit einer Schmelztemperatur von 70 - 170°C, vorzugsweise 85 - 140°C, besonders bevorzugt 100 - 120°C, und die Kunststoffummantelung eine Dicke von 100 - 3000 µm aufweist und die Mercaptosilan-Wachs-Abmischung mindestens ein Mercaptosilan der allgemeinen Formel I 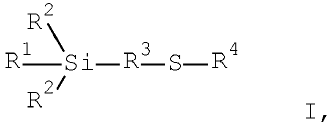 wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, vorzugsweise CH₂-CH₂ , CH₂-CH(CH₃), -CH(CH₃)-CH₂- oder CH₂-CH₂-CH₂, m im Mittel 1 bis 30, bevorzugt 2 bis 20, besonders bevorzugt 2 bis 15, ganz besonders bevorzugt 3 bis 10, außerordentlich bevorzugt 3,5 bis 7,9, ist, und R⁶ aus mindestens 1, vorzugsweise 11 bis 30, besonders bevorzugt 12 bis 20, C-Atomen besteht und eine unsubstituierte oder substituierte, verzweigte oder unverzweigte einbindige Alkyl-, Alkenyl, Aryl oder Aralkylgruppe ist,
R² gleich oder verschieden und eine R¹-, C1-C12-Alkyl- oder R⁷O-Gruppe ist, mit R⁷ gleich H, Methyl, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30, vorzugsweise C1-C6, besonders bevorzugt C3, Kohlenwasserstoffgruppe und R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30, bevorzugt C5 bis C30, besonders bevorzugt C5 bis C20, ganz besonders bevorzugt C7 bis C15, außerordentlich bevorzugt C7 bis C11, Kohlenwasserstoffgruppe,
und mindestens ein Wachs, vorzugsweise paraffinisches Wachs, besonders bevorzugt eine Mischung unterschiedlich paraffinischer Wachse, insbesondere bevorzugt eine Mischung aus n- und iso- paraffinischen Wachsen, mit einem Erstarrungspunkt von 30 - 160°C, vorzugsweise 40 - 130°C, besonders bevorzugt 60 - 80°C, enthält.

Die Schmelztemperatur des Kunststoffes wird nach ISO 3146:2000 bestimmt.

Die Bestimmung des Erstarrungspunktes des Wachses erfolgt nach DIN ISO 2207.

Die Kunststoffummantelung kann > 90 Gew.-%, vorzugsweise ≥ 95 Gew.-%, besonders bevorzugt > 97 Gew.-%, Kunststoff enthalten. Die Kunststoffummantelung kann aus Polypropylen, Polyethylen, vorzugsweise LDPE, Ethylenvinylacetat-Copolymer oder Mischungen der vorgenannten Kunststoffe bestehen.

Die Kunststoffummantelung kann die Mercaptosilan-Wachs-Abmischung vollständig umhüllen.

Die Kunststoffummantelung kann vorzugsweise ein Kunststoffbeutel sein.

Der Kunststoff kann eine Glasübergangstemperatur von -80 - +10°C haben. Besonders bevorzugt kann Ethylenvinylacetat-Copolymer eine Glastemperatur von -30 - -10°C, Polyethylen eine Glastemperatur von -100 - -20°C und Polypropylen eine Glastemperatur von -30 - +10°C haben.

Die Glasübergangstemperatur kann nach DIN EN ISO 11357-2 bestimmt werden.

Der Kunststoff kann eine durchschnittliche Molmasse von 50.000 - 1.000.000 g/mol, vorzugsweise von 80.000 - 500.000 g/mol, besonders bevorzugt von 100.000 - 250.000 g/mol, haben. Die durchschnittliche Molmasse kann nach DIN EN ISO 16014-5 bestimmt werden.

Der Kunststoff kann eine Schmelze-Massefließrate (MFR) von 0,2 - 30 g/10min haben (DIN EN ISO 1133: 190°C/2,16kg). Besonders bevorzugt kann Ethylenvinylacetat-Copolymer eine Schmelze-Massefließrate von 0,4 - 1,0 g/10min, Polyethylen eine Schmelze-Massefließrate von 1,0 - 5,0 g/10min und Polypropylen eine Schmelze-Massefließrate von 20 - 30 g/10min haben.

Das Ethylenvinylacetat-Copolymer ist ein Copolymer aus Vinylacetat und Ethylen und kann 4 - 30 Gew.-%, vorzugsweise 4,3 - 6,7 Gew.-%, Vinylacetat enthalten (DIN EN ISO 4613-2).

Der Kunststoff Polyethylen kann HDPE oder LDPE sein. Der Kunststoff LDPE kann eine Schmelztemperatur zwischen 105°C und 130°C haben. Der Kunststoff HDPE kann eine Schmelztemperatur zwischen 125°C und 150°C haben. Der Kunststoff Polypropylen (PP) kann eine Schmelztemperatur zwischen 140 und 170°C haben und das Ethylenvinylacetat-Copolymer kann eine Schmelztemperatur zwischen 70°C und 125°C haben.

Der Kunststoff Polyethylen kann ein LDPE mit einer Dichte von 0,915 - 0,935 g/cm³ oder ein HDPE mit einer Dichte von 0,94 - 0,97 g/cm³ sein. Das Polypropylen kann eine Dichte von 0,895 - 0,92 g/cm³ haben. Das Ethylenvinylacetat-Copolymer kann eine Dichte von 0,92 - 1,0 g/cm³ haben. Die Dichte des Kunststoffes kann nach DIN EN ISO 1183 bestimmt werden.

Die Kunststoffummantelung, vorzugsweise der Kunststoffbeutel, kann eine Foliendicke von vorzugsweise 100 - 1000 µm, besonders bevorzugt von 100 - 250 µm, aufweisen.

Die Wasserdampfpermeabilität für die Kunststoffummantelung, vorzugsweise Kunststoffbeutel, kann kleiner 10 g/(m²d), bevorzugt kleiner 5 g/(m²d), besonders bevorzugt kleiner 1 g/(m²d), bei 85 % r.F. und 23°C sein. Die Sauerstoffpermeabilitäten für die Kunststoffummantelung, vorzugsweise Kunststoffbeutel, kann kleiner 15000 cm³/(m² d bar), bevorzugt kleiner 10000 cm³/(m² d bar), besonders bevorzugt kleiner 3000 cm³/(m² d bar), bei 85 % r.F. und 25°C sein.

Die Wasserdampfpermeabilität kann nach DIN 53122-2 bestimmt werden.

Die Sauerstoffpermeabilität kann nach DIN 53380-2 bestimmt werden.

Die Mercaptosilan-Wachs-Abmischung kann mindestens 10 Gew.-%, vorzugsweise mindestens 40 Gew.-%, besonders bevorzugt 70 - 95 Gew.-%, ganz besonders bevorzugt 80 - 85 Gew.-%, Mercaptosilan der allgemeinen Formel I, bezogen auf die Mercaptosilan-Wachs-Abmischung, enthalten.

Das Gewichtsverhältnis von Mercaptosilan der allgemeinen Formel I zu Wachs kann 10:90 bis 95:5, vorzugsweise 55:45 bis 90:10, besonders bevorzugt 80:20 bis 85:15, betragen Das eingesetzte Wachs kann eine Nadelpenetration von 14 - 26 1/10 mm, vorzugsweise von 15 - 20 1/10 mm bei 25°C aufweisen.

Die Nadelpenetration kann nach DIN 51579 gemessen werden.

Die Mercaptosilane der allgemeinen Formel I können Verbindungen sein, wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30 ist, und R⁶ aus mindestens 11 C-Atomen besteht und eine unsubstituierte oder substituierte, verzweigte oder unverzweigte einbindige Alkyl-, Alkenyl, Aryl oder Aralkylgruppe ist,
R² gleich und eine C1-C12-Alkyl- oder R⁷O-Gruppe ist, mit R⁷ gleich H, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe, R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Die Mercaptosilane der allgemeinen Formel I können Verbindungen sein, wobei R¹ gleich -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 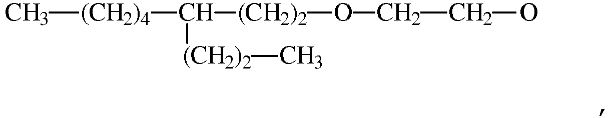 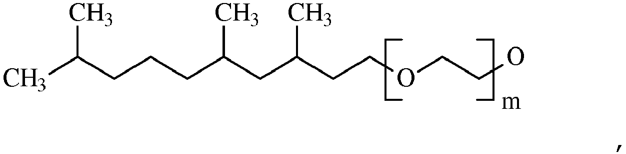 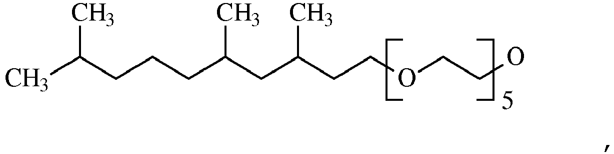 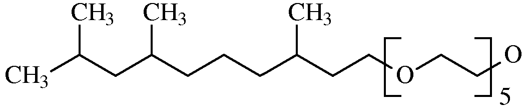 oder 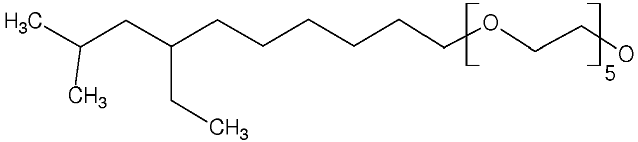 ist,
R² verschieden und eine R¹-, C1-C12-Alkyl- oder R⁷O-Gruppe ist, mit R⁷ gleich H, Methyl, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Die Mercaptosilane der allgemeinen Formel I können Verbindungen sein, wobei R¹ gleich -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 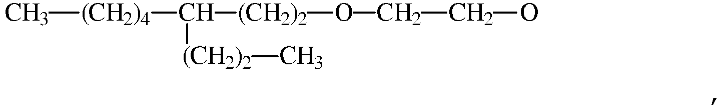 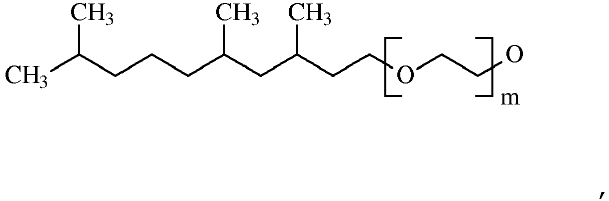 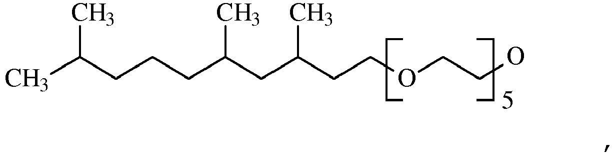 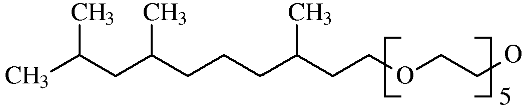 oder 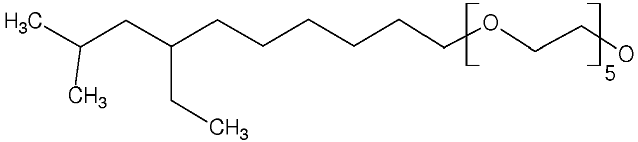 ist,
R² gleich R¹ -Gruppe ist,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe.

Bevorzugte Verbindungen der Formel I mit R⁴ = H können sein:
[(C₁₁H₂₃O-(CH₂-CH₂O)₂](EtO)₂Si(CH₂)₃SH,
[(C₁₁H₂₃O-(CH₂-CH₂O)₃](EtO)₂Si(CH₂)₃SH,
[(C₁₁H₂₃O-(CH₂-CH₂O)₄(EtO)₂Si(CH₂)₃SH,
[(C₁₁H₂₃O-(CH₂-CH₂O)₅](EtO)₂Si(CH₂)₃SH,
[(C₁₁H₂₃O-(CH₂-CH₂O)₆](EtO)₂Si(CH₂)₃SH,
[(C₁₂H₂₅O-(CH₂-CH₂O)₂](EtO)₂Si(CH₂)₃SH,
[(C₁₂H₂₅O-(CH₂-CH₂O)₃](EtO)₂Si(CH₂)₃SH,
[(C₁₂H₂₅O-(CH₂-CH₂O)₄](EtO)₂Si(CH₂)₃SH,
[(C₁₂H₂₅O-(CH₂-CH₂O)₅](EtO)₂Si(CH₂)₃SH,
[(C₁₂H₂₅O-(CH₂-CH₂O)₆](EtO)₂Si(CH₂)₃SH,
[(C₁₃H₂₇O-(CH₂-CH₂O)₂](EtO)₂Si(CH₂)₃SH,
[(C₁₃H₂₇O-(CH₂-CH₂O)₃](EtO)₂Si(CH₂)₃SH,
[(C₁₃H₂₇O-(CH₂-CH₂O)₄](EtO)₂Si(CH₂)₃SH,
[(C₁₃H₂₇O-(CH₂-CH₂O)₅](EtO)₂Si(CH₂)₃SH,
[(C₁₃H₂₇O-(CH₂-CH₂O)₆](EtO)₂Si(CH₂)₃SH,
[(C₁₄H₂₉O-(CH₂-CH₂O)₂](EtO)₂Si(CH₂)₃SH,
[(C₁₄H₂₉O-(CH₂-CH₂O)₃](EtO)₂Si(CH₂)₃SH,
[(C₁₄H₂₉O-(CH₂-CH₂O)₄](EtO)₂Si(CH₂)₃SH,
[(C₁₄H₂₉O-(CH₂-CH₂O)₅](EtO)₂Si(CH₂)₃SH,
[(C₁₄H₂₉O-(CH₂-CH₂O)₆](EtO)₂Si(CH₂)₃SH,
[(C₁₅H₃₁O-(CH₂-CH₂O)₂](EtO)₂Si(CH₂)₃SH,
[(C₁₅H₃₁O-(CH₂-CH₂O)₃](EtO)₂Si(CH₂)₃SH,
[(C₁₅H₃₁O-(CH₂-CH₂O)₄](EtO)₂Si(CH₂)₃SH,
[(C₁₅H₃₁O-(CH₂-CH₂O)₅](EtO)₂Si(CH₂)₃SH,
[(C₁₅H₃₁O-(CH₂-CH₂O)₆](EtO)₂Si(CH₂)₃SH,
[(C₁₆H₃₃O-(CH₂-CH₂O)₂](EtO)₂Si(CH₂)₃SH,
[(C₁₆H₃₃O-(CH₂-CH₂O)₃](EtO)₂Si(CH₂)₃SH,
[(C₁₆H₃₃O-(CH₂-CH₂O)₄](EtO)₂Si(CH₂)₃SH,
[(C₁₆H₃₃O-(CH₂-CH₂O)₅](EtO)₂Si(CH₂)₃SH,
[(C₁₆H₃₃O-(CH₂-CH₂O)₆](EtO)₂Si(CH₂)₃SH,
[(C₁₇H₃₅O-(CH₂-CH₂O)₂](EtO)₂Si(CH₂)₃SH,
[(C₁₇H₃₅O-(CH₂-CH₂O)₃](EtO)₂Si(CH₂)₃SH,
[(C₁₇H₃₅O-(CH₂-CH₂O)₄](EtO)₂Si(CH₂)₃SH,
[(C₁₇H₃₅O-(CH₂-CH₂O)₅](EtO)₂Si(CH₂)₃SH,
[(C₁₇H₃₅O-(CH₂-CH₂O)₆](EtO)₂Si(CH₂)₃SH,
[(C₁₁H₂₃O-(CH₂-CH₂O)₂]₂(EtO)Si(CH₂)₃SH,
[(C₁₁H₂₃O-(CH₂-CH₂O)₃]₂(EtO)Si(CH₂)₃SH,
[(C₁₁H₂₃O-(CH₂-CH₂O)₄]₂(EtO)Si(CH₂)₃SH,
[(C₁₁H₂₃O-(CH₂-CH₂O)₅]₂(EtO)Si(CH₂)₃SH,
[(C₁₁H₂₃O-(CH₂-CH₂O)₆]₂(EtO)Si(CH₂)₃SH,
[(C₁₂H₂₅O-(CH₂-CH₂O)₂]₂(EtO)Si(CH₂)₃SH,
[(C₁₂H₂₅O-(CH₂-CH₂O)₃]₂(EtO)Si(CH₂)₃SH,
[(C₁₂H₂₅O-(CH₂-CH₂O)₄]₂(EtO)Si(CH₂)₃SH,
[(C₁₂H₂₅O-(CH₂-CH₂O)₅]₂(EtO)Si(CH₂)₃SH,
[(C₁₂H₂₅O-(CH₂-CH₂O)₆]₂(EtO)Si(CH₂)₃SH,
[(C₁₃H₂₇O-(CH₂-CH₂O)₂]₂(EtO)Si(CH₂)₃SH,
[(C₁₃H₂₇O-(CH₂-CH₂O)₃]₂(EtO)Si(CH₂)₃SH,
[(C₁₃H₂₇O-(CH₂-CH₂O)₄]₂(EtO)Si(CH₂)₃SH,
[(C₁₃H₂₇O-(CH₂-CH₂O)₅]₂(EtO)Si(CH₂)₃SH,
[(C₁₃H₂₇O-(CH₂-CH₂O)₆]₂(EtO)Si(CH₂)₃SH,
[(C₁₄H₂₉O-(CH₂-CH₂O)₂]₂(EtO)Si(CH₂)₃SH,
[(C₁₄H₂₉O-(CH₂-CH₂O)₃]₂(EtO)Si(CH₂)₃SH,
[(C₁₄H₂₉O-(CH₂-CH₂O)₄]₂(EtO)Si(CH₂)₃SH,
[(C₁₄H₂₉O-(CH₂-CH₂O)₅]₂(EtO)Si(CH₂)₃SH,
[(C₁₄H₂₉O-(CH₂-CH₂O)₆]₂(EtO)Si(CH₂)₃SH,
[(C₁₅H₃₁O-(CH₂-CH₂O)₂]₂(EtO)Si(CH₂)₃SH,
[(C₁₅H₃₁O-(CH₂-CH₂O)₃]₂(EtO)Si(CH₂)₃SH,
[(C₁₅H₃₁O-(CH₂-CH₂O)₄]₂(EtO)Si(CH₂)₃SH,
[(C₁₅H₃₁O-(CH₂-CH₂O)₅]₂(EtO)Si(CH₂)₃SH,
[(C₁₅H₃₁O-(CH₂-CH₂O)₆]₂(EtO)Si(CH₂)₃SH,
[(C₁₆H₃₃O-(CH₂-CH₂O)₂]₂(EtO)Si(CH₂)₃SH,
[(C₁₆H₃₃O-(CH₂-CH₂O)₃]₂(EtO)Si(CH₂)₃SH,
[(C₁₆H₃₃O-(CH₂-CH₂O)₄]₂(EtO)Si(CH₂)₃SH,
[(C₁₆H₃₃O-(CH₂-CH₂O)₅]₂(EtO)Si(CH₂)₃SH,
[(C₁₆H₃₃O-(CH₂-CH₂O)₆]₂(EtO)Si(CH₂)₃SH,
[(C₁₇H₃₅O-(CH₂-CH₂O)₂]₂(EtO)Si(CH₂)₃SH,
[(C₁₇H₃₅O-(CH₂-CH₂O)₃]₂(EtO)Si(CH₂)₃SH,
[(C₁₇H₃₅O-(CH₂-CH₂O)₄]₂(EtO)Si(CH₂)₃SH,
[(C₁₇H₃₅O-(CH₂-CH₂O)₅]₂(EtO)Si(CH₂)₃SH,
[(C₁₇H₃₅O-(CH₂-CH₂O)₆]₂(EtO)Si(CH₂)₃SH,
[(C₁₁H₂₃O-(CH₂-CH₂O)₂]₃Si(CH₂)₃SH,
[(C₁₁H₂₃O-(CH₂-CH₂O)₃]₃Si(CH₂)₃SH,
[(C₁₁H₂₃O-(CH₂-CH₂O)₄]₃Si(CH₂)₃SH,
[(C₁₁H₂₃O-(CH₂-CH₂O)₅]₃Si(CH₂)₃SH,
[(C₁₁H₂₃O-(CH₂-CH₂O)₆]₃Si(CH₂)₃SH,
[(C₁₂H₂₅O-(CH₂-CH₂O)₂]₃Si(CH₂)₃SH,
[(C₁₂H₂₅O-(CH₂-CH₂O)₃]₃Si(CH₂)₃SH,
[(C₁₂H₂₅O-(CH₂-CH₂O)₄]₃Si(CH₂)₃SH,
[(C₁₂H₂₅O-(CH₂-CH₂O)₅]₃Si(CH₂)₃SH,
[(C₁₂H₂₅O-(CH₂-CH₂O)₆]₃Si(CH₂)₃SH,
[(C₁₃H₂₇O-(CH₂-CH₂O)₂]₃Si(CH₂)₃SH,
[(C₁₃H₂₇O-(CH₂-CH₂O)₃]₃Si(CH₂)₃SH,
[(C₁₃H₂₇O-(CH₂-CH₂O)₄]₃Si(CH₂)₃SH,
[(C₁₃H₂₇O-(CH₂-CH₂O)₅]₃Si(CH₂)₃SH,
[(C₁₃H₂₇O-(CH₂-CH₂O)₆]₃Si(CH₂)₃SH,
[(C₁₄H₂₉O-(CH₂-CH₂O)₂]₃Si(CH₂)₃SH,
[(C₁₄H₂₉O-(CH₂-CH₂O)₃]₃Si(CH₂)₃SH,
[(C₁₄H₂₉O-(CH₂-CH₂O)₄]₃Si(CH₂)₃SH,
[(C₁₄H₂₉O-(CH₂-CH₂O)₅]₃Si(CH₂)₃SH,
[(C₁₄H₂₉O-(CH₂-CH₂O)₆]₃Si(CH₂)₃SH,
[(C₁₅H₃₁O-(CH₂-CH₂O)₂]₃Si(CH₂)₃SH,
[(C₁₅H₃₁-(CH₂-CH₂O)₃]₃Si(CH₂)₃SH,
[(C₁₅H₃₁O-(CH₂-CH₂O)₄]₃Si(CH₂)₃SH,
[(C₁₅H₃₁O-(CH₂-CH₂O)₅]₃Si(CH₂)₃SH,
[(C₁₅H₃₁O-(CH₂-CH₂O)₆]₃Si(CH₂)₃SH,
[(C₁₆H₃₃O-(CH₂-CH₂O)₂]₃Si(CH₂)₃SH,
[(C₁₆H₃₃-(CH₂-CH₂O)₃]₃Si(CH₂)₃SH,
[(C₁₆H₃₃O-(CH₂-CH₂O)₄]₃Si(CH₂)₃SH,
[(C₁₆H₃₃O-(CH₂-CH₂O)₅]₃Si(CH₂)₃SH,
[(C₁₆H₃₃O-(CH₂-CH₂O)₆]₃Si(CH₂)₃SH,
[(C₁₇H₃₅O-(CH₂-CH₂O)₂]₃Si(CH₂)₃SH,
[(C₁₇H₃₅-(CH₂-CH₂O)₃]₃Si(CH₂)₃SH,
[(C₁₇H₃₅O-(CH₂-CH₂O)₄]₃Si(CH₂)₃SH,
[(C₁₇H₃₅O-(CH₂-CH₂O)₅]₃Si(CH₂)₃SH,
[(C₁₇H₃₅O-(CH₂-CH₂O)₆]₃Si(CH₂)₃SH,
[(C₁₁H₂₃O-(CH₂-CH₂O)₂](EtO)₂Si-CH₂-CH(CH₃)-CH₂-SH,
[(C₁₁H₂₃O-(CH₂-CH₂O)₃](EtO)₂Si-CH₂-CH(CH₃)-CH₂-SH,
[(C₁₁H₂₃O-(CH₂-CH₂O)₄](EtO)₂Si-CH₂-CH(CH₃)-CH₂-SH,
[(C₁₁H₂₃O-(CH₂-CH₂O)₅](EtO)₂Si-CH₂-CH(CH₃)-CH₂-SH,
[(C₁₁H₂₃O-(CH₂-CH₂O)₆](EtO)₂Si-CH₂-CH(CH₃)-CH₂-SH,
[(C₁₂H₂₅O-(CH₂-CH₂O)₂](EtO)₂Si-CH₂-CH(CH₃)-CH₂-SH,
[(C₁₂H₂₅O-(CH₂-CH₂O)₃](EtO)₂Si-CH₂-CH(CH₃)-CH₂-SH,
[(C₁₂H₂₅O-(CH₂-CH₂O)₄](EtO)₂Si-CH₂-CH(CH₃)-CH₂-SH,
[(C₁₂H₂₅O-(CH₂-CH₂O)₅](EtO)₂Si-CH₂-CH(CH₃)-CH₂-SH,
[(C₁₂H₂₅O-(CH₂-CH₂O)₆](EtO)₂Si-CH₂-CH(CH₃)-CH₂-SH,
[(C₁₃H₂₇O-(CH₂-CH₂O)₂](EtO)₂Si-CH₂-CH(CH₃)-CH₂-SH,
[(C₁₃H₂₇O-(CH₂-CH₂O)₃](EtO)₂Si-CH₂-CH(CH₃)-CH₂-SH,
[(C₁₃H₂₇O-(CH₂-CH₂O)₄](EtO)₂Si-CH₂-CH(CH₃)-CH₂-SH,
[(C₁₃H₂₇O-(CH₂-CH₂O)₅](EtO)₂Si-CH₂-CH(CH₃)-CH₂-SH,
[(C₁₃H₂₇O-(CH₂-CH₂O)₆](EtO)₂Si-CH₂-CH(CH₃)-CH₂-SH,
[(C₁₄H₂₉O-(CH₂-CH₂O)₂](EtO)₂Si-CH₂-CH(CH₃)-CH₂-SH,
[(C₁₄H₂₉O-(CH₂-CH₂O)₃](EtO)₂Si-CH₂-CH(CH₃)-CH₂-SH,
[(C₁₄H₂₉O-(CH₂-CH₂O)₄](EtO)₂Si-CH₂-CH(CH₃)-CH₂-SH,
[(C₁₄H₂₉O-(CH₂-CH₂O)₅](EtO)₂Si-CH₂-CH(CH₃)-CH₂-SH,
[(C₁₄H₂₉O-(CH₂-CH₂O)₆](EtO)₂Si-CH₂-CH(CH₃)-CH₂-SH,
[(C₁₅H₃₁O-(CH₂-CH₂O)₂](EtO)₂Si-CH₂-CH(CH₃)-CH₂-SH,
[(C₁₅H₃₁O-(CH₂-CH₂O)₃](EtO)₂Si-CH₂-CH(CH₃)-CH₂-SH,
[(C₁₅H₃₁O-(CH₂-CH₂O)₄](EtO)₂Si-CH₂-CH(CH₃)-CH₂-SH,
[(C₁₅H₃₁O-(CH₂-CH₂O)₅](EtO)₂Si-CH₂-CH(CH₃)-CH₂-SH,
[(C₁₅H₃₁O-(CH₂-CH₂O)₆](EtO)₂Si-CH₂-CH(CH₃)-CH₂-SH,
[(C₁₆H₃₃O-(CH₂-CH₂O)₂](EtO)₂Si-CH₂-CH(CH₃)-CH₂-SH,
[(C₁₆H₃₃O-(CH₂-CH₂O)₃](EtO)₂Si-CH₂-CH(CH₃)-CH₂-SH,
[(C₁₆H₃₃O-(CH₂-CH₂O)₄](EtO)₂Si-CH₂-CH(CH₃)-CH₂-SH,
[(C₁₆H₃₃O-(CH₂-CH₂O)₅](EtO)₂Si-CH₂-CH(CH₃)-CH₂-SH,
[(C₁₆H₃₃O-(CH₂-CH₂O)₆](EtO)₂Si-CH₂-CH(CH₃)-CH₂-SH,
[(C₁₇H₃₅O-(CH₂-CH₂O)₂](EtO)₂Si-CH₂-CH(CH₃)-CH₂-SH,
[(C₁₇H₃₅O-(CH₂-CH₂O)₃](EtO)₂Si-CH₂-CH(CH₃)-CH₂-SH,
[(C₁₇H₃₅O-(CH₂-CH₂O)₄](EtO)₂Si-CH₂-CH(CH₃)-CH₂-SH,
[(C₁₇H₃₅O-(CH₂-CH₂O)₅](EtO)₂Si-CH₂-CH(CH₃)-CH₂-SH,
[(C₁₇H₃₅O-(CH₂-CH₂O)₆](EtO)₂Si-CH₂-CH(CH₃)-CH₂-SH,
[(C₁₁H₂₃O-(CH₂-CH₂O)₂]₂(EtO)Si-CH₂-CH(CH₃)-CH₂-SH,
[(C₁₁H₂₃O-(CH₂-CH₂O)₃]₂(EtO)Si-CH₂-CH(CH₃)-CH₂-SH,
[(C₁₁H₂₃O-(CH₂-CH₂O)₄]₂(EtO)Si-CH₂-CH(CH₃)-CH₂-SH,
[(C₁₁H₂₃O-(CH₂-CH₂O)₅]₂(EtO)Si-CH₂-CH(CH₃)-CH₂-SH,
[(C₁₁H₂₃O-(CH₂-CH₂O)₆]₂(EtO)Si-CH₂-CH(CH₃)-CH₂-SH,
[(C₁₂H₂₅O-(CH₂-CH₂O)₂]₂(EtO)Si-CH₂-CH(CH₃)-CH₂-SH,
[(C₁₂H₂₅O-(CH₂-CH₂O)₃]₂(EtO)Si-CH₂-CH(CH₃)-CH₂-SH,
[(C₁₂H₂₅O-(CH₂-CH₂O)₄₂(EtO)Si-CH₂-CH(CH₃)-CH₂-SH,
[(C₁₂H₂₅O-(CH₂-CH₂O)₅]₂(EtO)Si-CH₂-CH(CH₃)-CH₂-SH,
[(C₁₂H₂₅O-(CH₂-CH₂O)₆]₂(EtO)Si-CH₂-CH(CH₃)-CH₂-SH,
[(C₁₃H₂₇O-(CH₂-CH₂O)₂]₂(EtO)Si-CH₂-CH(CH₃)-CH₂-SH,
[(C₁₃H₂₇O-(CH₂-CH₂O)₃]₂(EtO)Si-CH₂-CH(CH₃)-CH₂-SH,
[(C₁₃H₂₇O-(CH₂-CH₂O)₄]₂(EtO)Si-CH₂-CH(CH₃)-CH₂-SH,
[(C₁₃H₂₇O-(CH₂-CH₂O)₅]₂(EtO)Si-CH₂-CH(CH₃)-CH₂-SH,
[(C₁₃H₂₇O-(CH₂-CH₂O)₆]₂(EtO)Si-CH₂-CH(CH₃)-CH₂-SH,
[(C₁₄H₂₉O-(CH₂-CH₂O)₂]₂(EtO)Si-CH₂-CH(CH₃)-CH₂-SH,
[(C₁₄H₂₉O-(CH₂-CH₂O)₃]₂(EtO)Si-CH₂-CH(CH₃)-CH₂-SH,
[(C₁₄H₂₉O-(CH₂-CH₂O)₄]₂(EtO)Si-CH₂-CH(CH₃)-CH₂-SH,
[(C₁₄H₂₉O-(CH₂-CH₂O)₅]₂(EtO)Si-CH₂-CH(CH₃)-CH₂-SH,
[(C₁₄H₂₉O-(CH₂-CH₂O)₆]₂(EtO)Si-CH₂-CH(CH₃)-CH₂-SH,
[(C₁₅H₃₁O-(CH₂-CH₂O)₂]₂(EtO)Si-CH₂-CH(CH₃)-CH₂-SH,
[(C₁₅H₃₁O-(CH₂-CH₂O)₃]₂(EtO)Si-CH₂-CH(CH₃)-CH₂-SH,
[(C₁₅H₃₁O-(CH₂-CH₂O)₄]₂(EtO)Si-CH₂-CH(CH₃)-CH₂-SH,
[(C₁₅H₃₁O-(CH₂-CH₂O)₅]₂(EtO)Si-CH₂-CH(CH₃)-CH₂-SH,
[(C₁₅H₃₁O-(CH₂-CH₂O)₆]₂(EtO)Si-CH₂-CH(CH₃)-CH₂-SH,
[(C₁₆H₃₃O-(CH₂-CH₂O)₂]₂(EtO)Si-CH₂-CH(CH₃)-CH₂-SH,
[(C₁₆H₃₃O-(CH₂-CH₂O)₃]₂(EtO)Si-CH₂-CH(CH₃)-CH₂-SH,
[(C₁₆H₃₃O-(CH₂-CH₂O)₄]₂(EtO)Si-CH₂-CH(CH₃)-CH₂-SH,
[(C₁₆H₃₃O-(CH₂-CH₂O)₅]₂(EtO)Si-CH₂-CH(CH₃)-CH₂-SH,
[(C₁₆H₃₃O-(CH₂-CH₂O)₆]₂(EtO)Si-CH₂-CH(CH₃)-CH₂-SH,
[(C₁₇H₃₅O-(CH₂-CH₂O)₂]₂(EtO)Si-CH₂-CH(CH₃)-CH₂-SH,
[(C₁₇H₃₅O-(CH₂-CH₂O)₃]₂(EtO)Si-CH₂-CH(CH₃)-CH₂-SH,
[(C₁₇H₃₅O-(CH₂-CH₂O)₄]₂(EtO)Si-CH₂-CH(CH₃)-CH₂-SH,
[(C₁₇H₃₅O-(CH₂-CH₂O)₅]₂(EtO)Si-CH₂-CH(CH₃)-CH₂-SH,
[(C₁₇H₃₅O-(CH₂-CH₂O)₆]₂(EtO)Si-CH₂-CH(CH₃)-CH₂-SH,
[(C₁₁H₂₃O-(CH₂-CH₂O)₂]₃Si-CH₂-CH(CH₃)-CH₂-SH,
[(C₁₁H₂₃O-(CH₂-CH₂O)₃]₃Si-CH₂-CH(CH₃)-CH₂-SH,
[(C₁₁H₂₃O-(CH₂-CH₂O)₄]₃Si-CH₂-CH(CH₃)-CH₂-SH,
[(C₁₁H₂₃O-(CH₂-CH₂O)₅]₃Si-CH₂-CH(CH₃)-CH₂-SH,
[(C₁₁H₂₃O-(CH₂-CH₂O)₆]₃Si-CH₂-CH(CH₃)-CH₂-SH,
[(C₁₂H₂₅O-(CH₂-CH₂O)₂]₃Si-CH₂-CH(CH₃)-CH₂-SH,
[(C₁₂H₂₅O-(CH₂-CH₂O)₃]₃Si-CH₂-CH(CH₃)-CH₂-SH,
[(C₁₂H₂₅O-(CH₂-CH₂O)₄]₃Si-CH₂-CH(CH₃)-CH₂-SH,
[(C₁₂H₂₅O-(CH₂-CH₂O)₅]3Si-CH₂-CH(CH₃)-CH₂-SH,
[(C₁₂H₂₅O-(CH₂-CH₂O)₆]₃Si-CH₂-CH(CH₃)-CH₂-SH,
[(C₁₃H₂₇O-(CH₂-CH₂O)₂]₃Si-CH₂-CH(CH₃)-CH₂-SH,
[(C₁₃H₂₇O-(CH₂-CH₂O)₃]₃Si-CH₂-CH(CH₃)-CH₂-SH,
[(C₁₃H₂₇O-(CH₂-CH₂O)₄]₃Si-CH₂-CH(CH₃)-CH₂-SH,
[(C₁₃H₂₇O-(CH₂-CH₂O)₅]₃Si-CH₂-CH(CH₃)-CH₂-SH,
[(C₁₃H₂₇O-(CH₂-CH₂O)₆]₃Si-CH₂-CH(CH₃)-CH₂-SH,
[(C₁₄H₂₉O-(CH₂-CH₂O)₂]₃Si-CH₂-CH(CH₃)-CH₂-SH,
[(C₁₄H₂₉O-(CH₂-CH₂O)₃]₃Si-CH₂-CH(CH₃)-CH₂-SH,
[(C₁₄H₂₉O-(CH₂-CH₂O)₄]₃Si-CH₂-CH(CH₃)-CH₂-SH,
[(C₁₄H₂₉O-(CH₂-CH₂O)₅]₃Si-CH₂-CH(CH₃)-CH₂-SH,
[(C₁₄H₂₉O-(CH₂-CH₂O)₆]₃Si-CH₂-CH(CH₃)-CH₂-SH.
[(C₁₅H₃₁O-(CH₂-CH₂O)₂]₃Si-CH₂-CH(CH₃)-CH₂-SH,
[(C₁₅H₃₁O-(CH₂-CH₂O)₃]₃Si-CH₂-CH(CH₃)-CH₂-SH,
[(C₁₅H₃₁O-(CH₂-CH₂O)₄]₃Si-CH₂-CH(CH₃)-CH₂-SH,
[(C₁₅H₃₁O-(CH₂-CH₂O)₅]₃Si-CH₂-CH(CH₃)-CH₂-SH,
[(C₁₅H₃₁O-(CH₂-CH₂O)₆]₃Si-CH₂-CH(CH₃)-CH₂-SH,
[(C₁₆H₃₃O-(CH₂-CH₂O)₂]₃Si-CH₂-CH(CH₃)-CH₂-SH,
[(C₁₆H₃₃O-(CH₂-CH₂O)₃]₃Si-CH₂-CH(CH₃)-CH₂-SH,
[(C₁₆H₃₃O-(CH₂-CH₂O)₄]₃Si-CH₂-CH(CH₃)-CH₂-SH,
[(C₁₆H₃₃O-(CH₂-CH₂O)₅]₃Si-CH₂-CH (CH₃)-CH₂-SH,
[(C₁₆H₃₃O-(CH₂-CH₂O)₆]₃Si-CH₂-CH(CH₃)-CH₂-SH,
[(C₁₇H₃₅O-(CH₂-CH₂O)₂]₃Si-CH₂-CH(CH₃)-CH₂-SH,
[(C₁₇H₃₅O-(CH₂-CH₂O)₃]₃Si-CH₂-CH(CH₃)-CH₂-SH,
[(C₁₇H₃₅O-(CH₂-CH₂O)₄]₃Si-CH₂-CH(CH₃)-CH₂-SH,
[(C₁₇H₃₅O-(CH₂-CH₂O)₅]₃Si-CH₂-CH(CH₃)-CH₂-SH oder
[(C₁₇H₃₅O-(CH₂-CH₂O)₆]₃Si-CH₂-CH(CH₃)-CH₂-SH, wobei R⁶ verzweigt oder unverzweigt sein kann.

Bevorzugte Verbindungen der Formel I mit R⁴ = CN können sein:
[(C₁₁H₂₃O-(CH₂-CH₂O)₂](EtO)₂Si(CH₂)₃SCN,
[(C₁₁H₂₃O-(CH₂-CH₂O)₃](EtO)₂Si(CH₂)₃SCN,
[(C₁₁H₂₃O-(CH₂-CH₂O)₄](EtO)₂Si(CH₂)₃SCN,
[(C₁₁H₂₃O-(CH₂-CH₂O)₅](EtO)₂Si(CH₂)₃SCN,
[(C₁₁H₂₃O-(CH₂-CH₂O)₆](EtO)₂Si(CH₂)₃SCN,
[(C₁₂H₂₅O-(CH₂-CH₂O)₂](EtO)₂Si(CH₂)₃SCN,
[(C₁₂H₂₅O-(CH₂-CH₂O)₃](EtO)₂Si(CH₂)₃SCN,
[(C₁₂H₂₅O-(CH₂-CH₂O)₄](EtO)₂Si(CH₂)₃SCN,
[(C₁₂H₂₅O-(CH₂-CH₂O)₅](EtO)₂Si(CH₂)₃SCN,
[(C₁₂H₂₅O-(CH₂-CH₂O)₆](EtO)₂Si(CH₂)₃SCN,
[(C₁₃H₂₇O-(CH₂-CH₂O)₂](EtO)₂Si(CH₂)₃SCN,
[(C₁₃H₂₇O-(CH₂-CH₂O)₃](EtO)₂Si(CH₂)₃SCN,
[(C₁₃H₂₇O-(CH₂-CH₂O)₄](EtO)₂Si(CH₂)₃SCN,
[(C₁₃H₂₇O-(CH₂-CH₂O)₅](EtO)₂Si(CH₂)₃SCN,
[(C₁₃H₂₇O-(CH₂-CH₂O)₆](EtO)₂Si(CH₂)₃SCN,
[(C₁₄H₂₉O-(CH₂-CH₂O)₂](EtO)₂Si(CH₂)₃SCN,
[(C₁₄H₂₉O-(CH₂-CH₂O)₃](EtO)₂Si(CH₂)₃SCN,
[(C₁₄H₂₉O-(CH₂-CH₂O)₄](EtO)₂Si(CH₂)₃SCN,
[(C₁₄H₂₉O-(CH₂-CH₂O)₅](EtO)₂Si(CH₂)₃SCN,
[(C₁₄H₂₉O-(CH₂-CH₂O)₆](EtO)₂Si(CH₂)₃SCN,
[(C₁₁H₂₃O-(CH₂-CH₂O)₂]₂(EtO)Si(CH₂)₃SCN,
[(C₁₁H₂₃O-(CH₂-CH₂O)₃]₂(EtO)Si(CH₂)₃SCN,
[(C₁₁H₂₃O-(CH₂-CH₂O)₄]₂(EtO)Si(CH₂)₃SCN,
[(C₁₁H₂₃O-(CH₂-CH₂O)₅]₂(EtO)Si(CH₂)₃SCN,
[(C₁₁H₂₃O-(CH₂-CH₂O)₆]₂(EtO)Si(CH₂)₃SCN,
[(C₁₂H₂₅O-(CH₂-CH₂O)₂]₂(EtO)Si(CH₂)₃SCN,
[(C₁₂H₂₅O-(CH₂-CH₂O)₃]₂(EtO)Si(CH₂)₃SCN,
[(C₁₂H₂₅O-(CH₂-CH₂O)₄]₂(EtO)Si(CH₂)₃SCN,
[(C₁₂H₂₅O-(CH₂-CH₂O)₅]₂(EtO)Si(CH₂)₃SCN,
[(C₁₂H₂₅O-(CH₂-CH₂O)₆]₂(EtO)Si(CH₂)₃SCN,
[(C₁₃H₂₇O-(CH₂-CH₂O)₂]₂(EtO)Si(CH₂)₃SCN,
[(C₁₃H₂₇O-(CH₂-CH₂O)₃]₂(EtO)Si(CH₂)₃SCN,
[(C₁₃H₂₇O-(CH₂-CH₂O)₄]₂(EtO)Si(CH₂)₃SCN,
[(C₁₃H₂₇O-(CH₂-CH₂O)₅]₂(EtO)Si(CH₂)₃SCN,
[(C₁₃H₂₇O-(CH₂-CH₂O)₆]₂(EtO)Si(CH₂)₃SCN,
[(C₁₄H₂₉O-(CH₂-CH₂O)₂]₂(EtO)Si(CH₂)₃SCN,
[(C₁₄H₂₉O-(CH₂-CH₂O)₃]₂(EtO)Si(CH₂)₃SCN,
[(C₁₄H₂₉O-(CH₂-CH₂O)₄]₂(EtO)Si(CH₂)₃SCN,
[(C₁₄H₂₉O-(CH₂-CH₂O)₅]₂(EtO)Si(CH₂)₃SCN,
[(C₁₄H₂₉O-(CH₂-CH₂O)₆]₂(EtO)Si(CH₂)₃SCN,
[(C₁₁H₂₃O-(CH₂-CH₂O)₂]₃Si(CH₂)₃SCN,
[(C₁₁H₂₃O-(CH₂-CH₂O)₃]₃Si(CH₂)₃SCN,
[(C₁₁H₂₃O-(CH₂-CH₂O)₄]₃Si(CH₂)₃SCN,
[(C₁₁H₂₃O-(CH₂-CH₂O)₅]₃Si(CH₂)₃SCN,
[(C₁₁H₂₃O-(CH₂-CH₂O)₆]₃Si(CH₂)₃SCN,
[(C₁₂H₂₅O-(CH₂-CH₂O)₂]₃Si(CH₂)₃SCN,
[(C₁₂H₂₅O-(CH₂-CH₂O)₃]₃Si(CH₂)₃SCN,
[(C₁₂H₂₅O-(CH₂-CH₂O)₄]₃Si(CH₂)₃SCN,
[(C₁₂H₂₅O-(CH₂-CH₂O)₅]₃Si(CH₂)₃SCN,
[(C₁₂H₂₅O-(CH₂-CH₂O)₆]₃Si(CH₂)₃SCN,
[(C₁₃H₂₇O-(CH₂-CH₂O)₂]₃Si(CH₂)₃SCN,
[(C₁₃H₂₇O-(CH₂-CH₂O)₃]₃Si(CH₂)₃SCN,
[(C₁₃H₂₇O-(CH₂-CH₂O)₄]₃Si(CH₂)₃SCN,
[(C₁₃H₂₇O-(CH₂-CH₂O)₅]₃Si(CH₂)₃SCN,
[(C₁₃H₂₇O-(CH₂-CH₂O)₆]₃Si(CH₂)₃SCN,
[(C₁₄H₂₉O-(CH₂-CH₂O)₂]₃Si(CH₂)₃SCN,
[(C₁₄H₂₉O-(CH₂-CH₂O)₃]₃Si(CH₂)₃SCN,
[(C₁₄H₂₉O-(CH₂-CH₂O)₄]₃Si(CH₂)₃SCN,
[(C₁₄H₂₉O-(CH₂-CH₂O)₅]₃Si(CH₂)₃SCN oder
[(C₁₄H₂₉O-(CH₂-CH₂O)₆]₃Si(CH₂)₃SCN, wobei R⁶ verzweigt oder unverzweigt sein kann.

Bevorzugte Verbindungen der Formel I mit R⁴ = -C(=O)-R⁹ und R⁹ = verzweigte oder unverzweigte -C₅H₁₁, -C₆H₁₃, -C₇H₁₅,-C₈H₁₇, -C₉H₁₉, -C₁₀H₂₁, -C₁₁H₂₃, -C₁₂H₂₅, -C₁₃H₂₇, -C₁₄H₂₉, -C₁₅H₃₁, - C₁₆H₃₃, -C₁₇H₃₅ und -C₆H₅ (Phenyl) können sein:
[(C₁₁H₂₃O-(CH₂-CH₂O)₂](EtO)₂Si(CH₂)₃-S-C(=O)-R⁹,
[(C₁₁H₂₃O-(CH₂-CH₂O)₃](EtO)₂Si(CH₂)₃-S-C(=O)-R⁹,
[(C₁₁H₂₃O-(CH₂-CH₂O)₄](EtO)₂Si(CH₂)₃-S-C(=O)-R⁹,
[(C₁₁H₂₃O-(CH₂-CH₂O)₅](EtO)₂Si(CH₂)₃-S-C(=O)-R⁹,
[(C₁₁H₂₃O-(CH₂-CH₂O)₆](EtO)₂Si(CH₂)₃-S-C(=O)-R⁹,
[(C₁₂H₂₅O-(CH₂-CH₂O)₂](EtO)₂Si(CH₂)₃-S-C(=O)-R⁹,
[(C₁₂H₂₅O-(CH₂-CH₂O)₃](EtO)₂Si(CH₂)₃-S-C(=O)-R⁹,
[(C₁₂H₂₅O-(CH₂-CH₂O)₄](EtO)₂Si(CH₂)₃-S-C(=O)-R⁹,
[(C₁₂H₂₅O-(CH₂-CH₂O)₅](EtO)₂Si(CH₂)₃-S-C(=O)-R⁹,
[(C₁₂H₂₅O-(CH₂-CH₂O)₆](EtO)₂Si(CH₂)₃-S-C(=O)-R⁹,
[(C₁₃H₂₇O-(CH₂-CH₂O)₂](EtO)₂Si(CH₂)₃-S-C(=O)-R⁹,
[(C₁₃H₂₇O-(CH₂-CH₂O)₃](EtO)₂Si(CH₂)₃-S-C(=O)-R⁹,
[(C₁₃H₂₇O-(CH₂-CH₂O)₄](EtO)₂Si(CH₂)₃-S-C(=O)-R⁹,
[(C₁₃H₂₇O-(CH₂-CH₂O)₅](EtO)₂Si(CH₂)₃-S-C(=O)-R⁹,
[(C₁₃H₂₇O-(CH₂-CH₂O)₆](EtO)₂Si(CH₂)₃-S-C(=O)-R⁹,
[(C₁₄H₂₉O-(CH₂-CH₂O)₂](EtO)₂Si(CH₂)₃-S-C(=O)-R⁹,
[(C₁₄H₂₉O-(CH₂-CH₂O)₃](EtO)₂Si(CH₂)₃-S-C(=O)-R⁹,
[(C₁₄H₂₉O-(CH₂-CH₂O)₄](EtO)₂Si(CH₂)₃-S-C(=O)-R⁹,
[(C₁₄H₂₉O-(CH₂-CH₂O)₅](EtO)₂Si(CH₂)₃-S-C(=O)-R⁹,
[(C₁₄H₂₉O-(CH₂-CH₂O)₆](EtO)₂Si(CH₂)₃-S-C(=O)-R⁹,
[(C₁₁H₂₃O-(CH₂-CH₂O)₂]₂(EtO)Si(CH₂)₃-S-C(=O) -R⁹,
[(C₁₁H₂₃O-(CH₂-CH₂O)₃]₂(EtO)Si(CH₂)₃-S-C(=O)-R⁹,
[(C₁₁H₂₃O-(CH₂-CH₂O)₄]₂(EtO)Si(CH₂)₃-S-C(=O)-R⁹,
[(C₁₁H₂₃O-(CH₂-CH₂O)₅]₂(EtO)Si(CH₂)₃-S-C(=O)-R⁹,
[(C₁₁H₂₃O-(CH₂-CH₂O)₆]₂(EtO)Si(CH₂)₃-S-C(=O)-R⁹,
[(C₁₂H₂₅O-(CH₂-CH₂O)₂]₂(EtO)Si(CH₂)₃-S-C(=O)-R⁹,
[(C₁₂H₂₅O-(CH₂-CH₂O)₃]₂(EtO)Si(CH₂)₃-S-C(=O)-R⁹,
[(C₁₂H₂₅O-(CH₂-CH₂O)₄]₂(EtO)Si(CH₂)₃-S-C(=O)-R⁹,
[(C₁₂H₂₅O-(CH₂-CH₂O)₅]₂(EtO)Si(CH₂)₃-S-C(=O)-R⁹,
[(C₁₂H₂₅O-(CH₂-CH₂O)₆]₂(EtO)Si(CH₂)₃-S-C(=O)-R⁹,
[(C₁₃H₂₇O-(CH₂-CH₂O)₂]₂(EtO)Si(CH₂)₃-S-C(=O)-R⁹,
[(C₁₃H₂₇O-(CH₂-CH₂O)₃]₂(EtO)Si(CH₂)₃-S-C(=O)-R⁹,
[(C₁₃H₂₇O-(CH₂-CH₂O)₄]₂(EtO)Si(CH₂)₃-S-C(=O)-R⁹,
[(C₁₃H₂₇O-(CH₂-CH₂O)₅]₂(EtO)Si(CH₂)₃-S-C(=O)-R⁹,
[(C₁₃H₂₇O-(CH₂-CH₂O)₆]₂(EtO)Si(CH₂)₃-S-C(=O)-R⁹
[(C₁₄H₂₉O-(CH₂-CH₂O)₂]₂(EtO)Si(CH₂)₃-S-C(=O)-R⁹,
[(C₁₄H₂₉O-(CH₂-CH₂O)₃]₂(EtO)Si(CH₂)₃-S-C(=O)-R⁹,
[(C₁₄H₂₉O-(CH₂-CH₂O)₄]₂(EtO)Si(CH₂)₃-S-C(=O)-R⁹,
[(C₁₄H₂₉O-(CH₂-CH₂O)₅]₂(EtO)Si(CH₂)₃-S-C(=O)-R⁹,
[(C₁₄H₂₉O-(CH₂-CH₂O)₆]₂(EtO)Si(CH₂)₃-S-C(=O)-R⁹,
[(C₁₁H₂₃O-(CH₂-CH₂O)₂]₃Si(CH₂)₃-S-C(=O)-R⁹,
[(C₁₁H₂₃O-(CH₂-CH₂O)₃]₃Si(CH₂)₃-S-C(=O)-R⁹,
[(C₁₁H₂₃O-(CH₂-CH₂O)₄]₃Si(CH₂)₃-S-C(=O)-R⁹,
[(C₁₁H₂₃O-(CH₂-CH₂O)₅]₃Si(CH₂)₃-S-C(=O)-R⁹,
[(C₁₁H₂₃O-(CH₂-CH₂O)₆]₃Si(CH₂)₃-S-C(=O)-R⁹,
[(C₁₂H₂₅O-(CH₂-CH₂O)₂]₃Si(CH₂)₃-S-C(=O)-R⁹,
[(C₁₂H₂₅O-(CH₂-CH₂O)₃]₃Si(CH₂)₃-S-C(=O)-R⁹,
[(C₁₂H₂₅O-(CH₂-CH₂O)₄]₃Si(CH₂)₃-S-C(=O)-R⁹,
[(C₁₂H₂₅O-(CH₂-CH₂O)₅]₃Si(CH₂)₃-S-C(=O)-R⁹,
[(C₁₂H₂₅O-(CH₂-CH₂O)₆]₃Si(CH₂)₃-S-C(=O)-R⁹,
[(C₁₃H₂₇O-(CH₂-CH₂O)₂]₃Si(CH₂)₃-S-C(=O)-R⁹,
[(C₁₃H₂₇O-(CH₂-CH₂O)₃]₃Si(CH₂)₃-S-C(=O)-R⁹,
[(C₁₃H₂₇O-(CH₂-CH₂O)₄]₃Si(CH₂)₃-S-C(=O)-R⁹,
[(C₁₃H₂₇O-(CH₂-CH₂O)₅]₃Si(CH₂)₃-S-C(=O)-R⁹,
[(C₁₃H₂₇O-(CH₂-CH₂O)₆]₃Si(CH₂)₃-S-C(=O)-R⁹,
[(C₁₄H₂₉O-(CH₂-CH₂O)₂]₃Si(CH₂)₃-S-C(=O)-R⁹,
[(C₁₄H₂₉O-(CH₂-CH₂O)₃]₃Si(CH₂)₃-S-C(=O)-R⁹,
[(C₁₄H₂₉O-(CH₂-CH₂O)₄]₃Si(CH₂)₃-S-C(=O)-R⁹,
[(C₁₄H₂₉O-(CH₂-CH₂O)₅]₃Si(CH₂)₃-S-C(=O)-R⁹ oder
[(C₁₄H₂₉O-(CH₂-CH₂O)₆]₃Si(CH₂)₃-S-C(=O)-R⁹.

R⁶ kann bevorzugt C₁₂ bis C₁₇, ganz besonders bevorzugt C₁₂ bis C₁₆, außerordentlich bevorzugt C₁₂ bis C₁₄, unsubstituiertes oder substituiertes, verzweigtes oder unverzweigtes einbindiges Alkyl sein.

R⁶ kann eine -C₁₁H₂₃, -C₁₂H₂₅, -C₁₃H₂₇, -C₁₄H₂₉, -C₁₅H₃₁, -C₁₆H₃₃ oder -C₁₇H₃₅ Alkylgruppe sein.

R⁶ kann bevorzugt C₁₁ bis C₃₅, besonders bevorzugt C₁₁ bis C₃₀, ganz besonders bevorzugt C₁₂ bis C₃₀, außerordentlich bevorzugt C₁₃ bis C₂₀, unsubstituiertes oder substituiertes, verzweigtes oder unverzweigtes einbindiges Alkenyl sein.

R⁶ kann bevorzugt C₁₁ bis C₁₄ und/oder C₁₆ bis C₃₀, ganz besonders bevorzugt C₁₁ bis C₁₄ und/oder C₁₆ bis C₂₅, außerordentlich bevorzugt C₁₂ bis C₁₄ und/oder C₁₆ bis C₂₀, unsubstituiertes oder substituiertes, verzweigtes oder unverzweigtes einbindiges Aralkyl sein.

R⁶ kann als Alkenyl C₁₁H₂₁, -C₁₂H₂₃, -C₁₃H₂₅, -C₁₄H₂₇, -C₁₅H₂₉,-C₁₆H₃₁ oder -C₁₇H₃₃ sein.

R¹ kann ein alkoxyliertes Ricinusöl (z.B. CAS 61791-12-6) sein.

R¹ kann ein alkoxyliertes Oleylamin (z.B. CAS 26635-93-8) sein.

Die Polyethergruppe (R⁵O)ₘ kann statistische Ethylen- und Propylenoxideinheiten oder Polyetherblöcke aus Polyethylenoxid und Polypropylenoxid enthalten.

Die Polyethergruppe (R⁵-O)ₘ kann bevorzugt sein:
(-O-CH₂-CH₂-)ₐ,
(-O-CH(CH₃)-CH₂-)ₐ,
(-O-CH₂-CH(CH₃)-)ₐ,
(-O-CH₂-CH₂-)ₐ(-O-CH(CH₃)-CH₂-),
(-O-CH₂-CH₂-)(-O-CH(CH₃)-CH₂-)ₐ,
(-O-CH₂-CH₂-)ₐ(-O-CH₂-CH(CH₃)-),
(-O-CH₂-CH₂-)(-O-CH₂-CH(CH₃)-)ₐ,
(-O-CH(CH₃)-CH₂-)ₐ(-O-CH₂-CH(CH₃)-),
(-O-CH(CH₃)-CH₂-)(-O-CH₂-CH(CH₃)-)ₐ,
(-O-CH₂-CH₂-)ₐ(-O-CH(CH₃)-CH₂-)_{b}(-O-CH₂-CH(CH₃)-)_{c} oder Kombination miteinander,
wobei a, b und c voneinander unabhängig sind und a gleich 1-50, bevorzugt 2-30, besonders bevorzugt 3-20, ganz besonders bevorzugt 4-15, außerordentlich bevorzugt 5-12,
b gleich 1-50, bevorzugt 2-30, besonders bevorzugt 3-20, ganz besonders bevorzugt 4-15, außerordentlich bevorzugt 5-12 und
c gleich 1-50, bevorzugt 2-30, besonders bevorzugt 3-20, ganz besonders bevorzugt 4-15, außerordentlich bevorzugt 5-12 ist.

Die Indexe a, b und c sind ganze Zahlen und bezeichnen die Anzahl der Wiederholeinheiten.

Die Gruppe (R⁵-O)ₘ kann für R⁴ gleich -H, -CN oder -C(=O)-R⁹ bevorzugt Ethylenoxid- (CH₂-CH₂-O)ₐ oder Propylenoxid-(CH(CH₃)-CH₂-O)ₐ bzw. (CH₂-CH(CH₃)-O)ₐ -Einheiten enthalten.

Die Gruppe (R⁵-O)ₘ kann für R⁴ gleich -H, -CN oder -C(=O)-R⁹ bevorzugt Ethylenoxid- (CH₂-CH₂-O)ₐ und Propylenoxid-(CH(CH₃)-CH₂-O)ₐ bzw. (CH₂-CH(CH₃)-O)ₐ -Einheiten statistisch verteilt oder in Blöcken enthalten.

Die Alkylpolyethergruppe Gruppe (R⁵-O)ₘ kann für R⁴ gleich - H bevorzugt Ethylenoxid- (CH₂-CH₂-O)ₐ und Propylenoxid-(CH(CH₃)-CH₂-)ₐ bzw. (CH₂-CH(CH₃)-O)ₐ -Einheiten statistisch verteilt oder in Blöcken enthalten.

Die Gruppe (R⁵-O)ₘ kann für R⁴ gleich -H bevorzugt Propylenoxid- (CH(CH₃)-CH₂-O)ₐ bzw. (CH₂-CH(CH₃)-O)ₐ-Einheiten enthalten.

Die Alkylpolyethergruppe O-(R⁵-O)ₘ-R⁶ kann für R⁴ gleich -H, -CN oder -C(C=O)-R⁹ sein:
O-(CH₂-CH₂O)₂-C₁₁H₂₃, O-(CH₂-CH₂O)₃-C₁₁H₂₃, O-(CH₂-CH₂O)₄-C₁₁H₂₃, O-(CH₂-CH₂O)₅-C₁₁H₂₃, O-(CH₂-CH₂O)₆-C₁₁H₂₃, O-(CH₂-CH₂O)₇-C₁₁H₂₃,
O-(CH(CH₃)-CH₂O)₂-C₁₁H₂₃, O-(CH(CH₃)-CH₂O)₃-C₁₁H₂₃, O-(CH(CH₃)-CH₂O)₄-C₁₁H₂₃, O-(CH(CH₃)-CH₂O)₅-C₁₁H₂₃, O-(CH(CH₃)-CH₂₀)₆-C₁₁H₂₃, O-(CH(CH₃)-CH₂O)₇-C₁₁H₂₃,
O-(CH₂-CH₂O)₂-C₁₂H₂₅, O-(CH₂-CH₂O)₃-C₁₂H₂₅, O-(CH₂-CH₂O)₄-C₁₂H₂₅, O-(CH₂-CH₂O)₅-C₁₂H₂₅, O-(CH₂-CH₂O)₆-C₁₂H₂₅, O-(CH₂-CH₂O)₇-C₁₂H₂₅,
O-(CH(CH₃)-CH₂O)₂-C₁₂H₂₅, O-(CH(CH₃)-CH₂O)₃-C₁₂H₂₅, O-(CH(CH₃)-CH₂O)₄-C₁₂H₂₅, O-(CH(CH₃)-CH₂O)₅-C₁₂H₂₅, O-(CH(CH₃)-CH₂O)₆-C₁₂H₂₅, O-(CH(CH₃)-CH₂O)₇-C₁₂H₂₅,
O-(CH₂-CH₂O)₂-C₁₃H₂₇, O-(CH₂-CH₂O)₃-C₁₃H₂₇, O-(CH₂-CH₂O)₄-C₁₃H₂₇, O-(CH₂-CH₂O)₅-C₁₃H₂₇, O-(CH₂-CH₂O)₆-C₁₃H₂₇, O-(CH₂-CH₂O)₇-C₁₃H₂₇,
O-(CH(CH₃)-CH₂O)₂-C₁₃H₂₇, O-(CH(CH₃)-CH₂O)₃-C₁₃H₂₇, O-(CH(CH₃)-CH₂O)₄-C₁₃H₂₇, O-(CH(CH₃)-CH₂O)₅-C₁₃H₂₇, O-(CH(CH₃)-CH₂O)₆-C₁₃H₂₇, O-(CH(CH₃)-CH₂O)₇-C₁₃H₂₇,
O-(CH₂-CH₂O)₂-C₁₄H₂₉, O-(CH₂-CH₂O)₃-C₁₄H₂₉, O-(CH₂-CH₂O)₄-C₁₄H₂₉, O-(CH₂-CH₂O)₅-C₁₄H₂₉, O-(CH₂-CH₂O)₆-C₁₄H₂₉, O-(CH₂-CH₂O)₇-C₁₄H₂₉,
O-(CH(CH₃)-CH₂O)₂-C₁₄H₂₉, O-(CH(CH₃)-CH₂O)₃-C₁₄H₂₉, O-(CH(CH₃)-CH₂₀)₄-C₁₄H₂₉, O-(CH(CH₃)-CH₂₀)₅-C₁₄H₂₉, O-(CH(CH₃)-CH₂O)₆-C₁₄H₂₉, O-(CH(CH₃)-CH₂O)₇-C₁₄H₂₉,
O-(CH₂-CH₂O)₂-C₁₅H₃₁, O-(CH₂-CH₂O)₃-C₁₅H₃₁, O-(CH₂-CH₂O)₄-C₁₅H₃₁, O-(CH₂-CH₂O)₅-C₁₅H₃₁, O-(CH₂-CH₂O)₆-C₁₅H₃₁, O-(CH₂-CH₂O)₇-C₁₅H₃₁,
O-(CH(CH₃)-CH₂O)₂-C₁₅H₃₁, O-(CH(CH₃)-CH₂O)₃-C₁₅H₃₁, O-(CH(CH₃)-CH₂O)₄-C₁₅H₃₁, O-(CH(CH₃)-CH₂O)₅-C₁₅H₃₁, O-(CH(CH₃)-CH₂O)₆-C₁₅H₃₁, O-(CH(CH₃)-CH₂O)₇-C₁₅H₃₁,
O-(CH₂-CH₂O)₂-C₁₆H₃₃, O-(CH₂-CH₂O)₃-C₁₆H₃₃, O-(CH₂-CH₂O)₄-C₁₆H₃₃, O-(CH₂-CH₂O)₅-C₁₆H₃₃, O-(CH₂-CH₂O)₆-C₁₆H₃₃, O-(CH₂-CH₂O)₇-C₁₆H₃₃,
O-(CH(CH₃)-CH₂O)₂-C₁₆H₃₃, O-(CH(CH₃)-CH₂O)₃-C₁₆H₃₃, O-(CH(CH₃)-CH₂O)₄-C₁₆H₃₃, O-(CH(CH₃)-CH₂O)₅-C₁₆H₃₃, O-(CH(CH₃)-CH₂O)₆-C₁₆H₃₃, O-(CH(CH₃)-CH₂O)₇-C₁₆H₃₃,
O-(CH₂-CH₂O)₂-C₁₇H₃₅, O-(CH₂-CH₂O)₃-C₁₇H₃₅, O-(CH₂-CH₂O)₄-C₁₇H₃₅, O-(CH₂-CH₂O)₅-C₁₇H₃₅, O-(CH₂-CH₂O)₆-C₁₇H₃₅, O-(CH₂-CH₂O)₇-C₁₇H₃₅,
O-(CH(CH₃)-CH₂O)₂-C₁₇H₃₅, O-(CH(CH₃)-CH₂O)₃-C₁₇H₃₅, O-(CH(CH₃)-O-H₂O)₄-C₁₇H₃₅, O-(CH(CH₃)-CH₂O)₅-C₁₇H₃₅, O-(CH(CH₃)-CH₂O)₆-C₁₇H₃₅ oder O-(CH(CH₃)-CH₂O)₇-C₁₇H₃₅.

Die Gruppe R⁵ kann substituiert sein. Die Gruppe R⁶ kann C₁₃H₂₇ sein.

R¹ kann -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, -O-(CH₂CH₂-O)₅-(CH₂)₁₀CH₃, -O-(CH₂CH₂-O)₅-(CH₂)₁₁CH₃, -O-(CH₂CH₂-O)₅-(CH₂)₁₂CH₃, -O-(CH₂CH₂-O)₅-(CH₂)₁₃CH₃, -O-(CH₂CH₂-O)₅-(CH₂)₁₄CH₃, -O-(CH₂CH₂-O)₃-(CH₂)₁₂CH₃, -O-(CH₂CH₂-O)₄-(CH₂)₁₂CH₃, -O-(CH₂CH₂-O)₆-(CH₂)₁₂CH₃, -O-(CH₂CH₂-O)₇-(CH₂)₁₂CH₃, 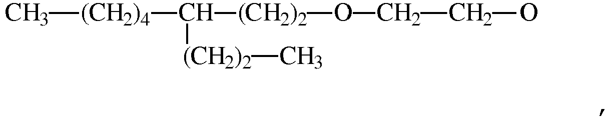 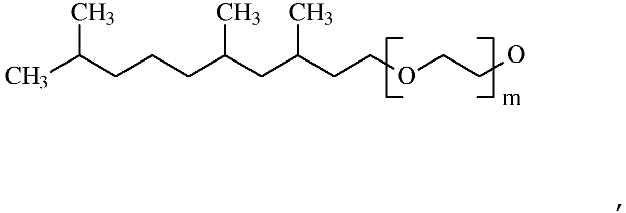 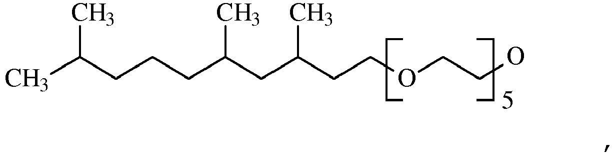 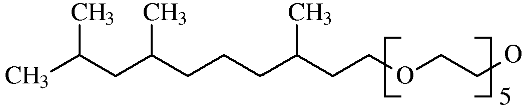 oder 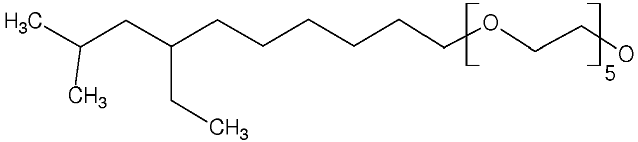 sein.

Die mittlere Verzweigungszahl der Kohlenstoffkette R⁶ kann 1 bis 5, vorzugsweise 1,2 bis 4, sein. Die mittlere Verzweigungszahl ist dabei definiert als die Anzahl der CH₃-Gruppen-1.

R³ kann CH₂, CH₂CH₂, CH₂CH₂CH₂, CH₂CH₂CH₂CH₂, CH(CH₃), CH₂CH(CH₃), CH(CH₃)CH₂, C(CH₃)₂, CH(C₂H₅), CH₂CH₂CH(CH₃), CH₂CH(CH₃)CH₂ oder 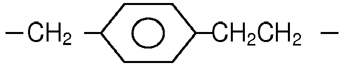 bedeuten.

Die Mercaptosilan-Wachs-Abmischung kann ein Gemisch aus unterschiedlichen Mercaptosilanen der allgemeinen Formel I und gegebenenfalls deren Kondensationsprodukten enthalten.

Das Gemisch aus unterschiedlichen Mercaptosilanen der allgemeinen Formel I kann Mercaptosilane der allgemeinen Formel I mit verschiedenen m-Werten enthalten.

Das Gemisch aus unterschiedlichen Mercaptosilanen der allgemeinen Formel I kann Mercaptosilane der allgemeinen Formel I mit verschiedenen R⁶-Gruppen enthalten. Die R⁶-Gruppen können dabei unterschiedliche C-Atomkettenlängen aufweisen.

Das Gemisch aus unterschiedlichen Mercaptosilanen der allgemeinen Formel I kann unterschiedliche Mercaptosilane der allgemeinen Formel I mit verschiedenen R¹ und R² Gruppen, wobei die R¹ und R² Gruppen aus Alkoxy und Alkylpolyethergruppen bestehen, enthalten.

Das Gemisch aus unterschiedlichen Mercaptosilanen der allgemeinen Formel I kann unterschiedliche Mercaptosilane der allgemeinen Formel I mit unterschiedlichem R² enthalten.

Das Gemisch aus unterschiedlichen Mercaptosilanen der allgemeinen Formel I kann unterschiedliche Mercaptosilane der allgemeinen Formel I mit verschiedenen R¹ und R² Gruppen, wobei die R¹ Gruppen aus Alkylpolyethergruppen und die R² Gruppen aus Ethoxygruppen bestehen und R⁶ eine Alkylkettenlänge von 13 C-Atomen, R⁵ Ethylen und m im Mittel 5 ist, enthalten.

Das Gemisch aus unterschiedlichen Mercaptosilanen der allgemeinen Formel I kann unterschiedliche Mercaptosilane der allgemeinen Formel I enthalten, wobei R² gleich oder verschieden und eine Ethoxy- oder Alkylpolyethergruppe (R¹) ist, R⁶ eine Alkylkettenlänge von 13 C-Atomen, R⁵ gleich Ethylen und m im Mittel 5 ist, und R² unterschiedlich ist.

Das Gemisch aus unterschiedlichen Mercaptosilanen der allgemeinen Formel I kann unterschiedliche Mercaptosilane der allgemeinen Formel I enthalten, wobei R¹ und R² Alkoxy und Alkylpolyethergruppen sind und R⁶ aus unterschiedlichen C-Atomkettenlängen besteht.

Das Gemisch aus unterschiedlichen Mercaptosilanen der allgemeinen Formel I kann unterschiedliche Mercaptosilane der allgemeinen Formel I enthalten, wobei R² gleich oder verschieden und eine Alkoxy- oder Alkylpolyethergruppe (R¹) ist, und R² in dem Gemisch unterschiedlich ist, R⁶ aus unterschiedlichen C-Atomkettenlängen besteht.

Das Gemisch aus unterschiedlichen Mercaptosilanen der allgemeinen Formel I kann bevorzugt 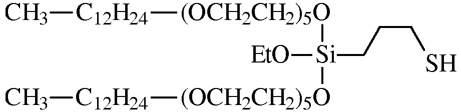 und/oder 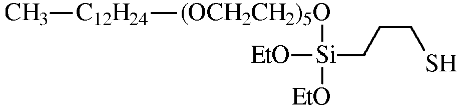 und gegebenenfalls Hydrolyse- und/oder
Kondensationsprodukte der vorgenannten Verbindungen enthalten.

Aus den Mercaptosilanen der Formel I können durch Wasserzugabe und ggf. Additivzugabe leicht Kondensationsprodukte, das heisst Oligo- und Polysiloxane gebildet werden.

Diese oligomeren oder polymeren Siloxane der Verbindungen der Formel I können als Kopplungsreagenzien für dieselben Anwendungen wie die monomeren Verbindungen der Formel I verwendet werden.

Die Mercaptosilanverbindungen können auch als Mischung der oligomeren oder polymeren Siloxane von Mercaptosilanen der allgemeinen Formel I oder als Mischungen von Mercaptosilanen der allgemeinen Formel I mit Mischungen der oligomeren oder polymeren Siloxane von Mercaptosilanen der allgemeinen Formel I vorliegen.

Ein weiterer Gegenstand der Erfindung ist ein Verfahren zur Herstellung der erfindungsgemäßen Kunststoff-ummantelten Mercaptosilan-Wachs-Abmischungen, welches dadurch gekennzeichnet ist, dass man in einem ersten Schritt durch Mischen von mindestens einem Mercaptosilan der allgemeinen Formel I mit mindestens einem Wachs, vorzugsweise einem paraffinischen Wachs, besonders bevorzugt einer Mischung unterschiedlicher paraffinischer Wachse, insbesondere bevorzugt einer Mischung n- und iso- paraffinischer Wachse, mit einem Erstarrungspunkt von 30 - 160°C, vorzugsweise von 40 - 130°C, besonders bevorzugt von 60 - 80°C, eine Mercaptosilan-Wachs-Abmischung erhält und in einem zweiten Schritt einen Kunststoffbeutel, wobei der Kunststoff des Beutels ausgewählt ist aus der Gruppe Polypropylen, Polyethylen, vorzugsweise LDPE, Ethylenvinylacetat-Copolymer oder Mischungen der vorgenannten Kunststoffe mit einer Schmelztemperatur von 70 - 170°C, vorzugsweise 85 - 140°C, besonders bevorzugt 100 -120°C, und die Kunststoffummantelung eine Dicke von 100 - 3000 µm aufweist mit der Mercaptosilan-Wachs-Abmischung aus dem ersten Schritt befüllt und verschließt.

Der Kunststoffbeutel kann > 90 Gew.-%, vorzugsweise > 95 Gew.-%, besonders bevorzugt > 97 Gew.-%, Kunststoff enthalten. Der Kunststoffbeutel kann aus Polypropylen, Polyethylen, vorzugsweise LDPE, Ethylenvinylacetat-Copolymer oder Mischungen der vorgenannten Kunststoffe bestehen.

Das erfindungsgemäße Verfahren kann kontinuierlich oder diskontinuierlich durchgeführt werden.

Das Gewichtsverhältnis von Mercaptosilan der allgemeinen Formel I zu Wachs kann 10:90 bis 95:5, vorzugsweise 80:20 bis 85:15, betragen.

Bei dem ersten Schritt des erfindungsgemäßen Verfahrens kann man die Mercaptosilan-Wachs-Abmischung bei Temperaturen von 30 - 160°C, vorzugsweise von 40 - 130°C, besonders bevorzugt von 60 - 80°C, herstellen.

Bei dem zweiten Schritt des erfindungsgemäßen Verfahrens kann man die Befüllung des Kunststoffbeutels mit der Mercaptosilan-Wachs-Abmischung bei einer Temperatur von 30 - 160°C, vorzugsweise von 40 - 130°C, besonders bevorzugt von 60 - 80°C, durchführen.

Zur Vermeidung von Kondensationsreaktionen kann die Herstellung der Mercaptosilan-Wachsmischung und/oder die Befüllung der Kunststoffbeutel in einer wasserfreien Umgebung, besonders bevorzugt in einer Inertgasatmosphäre, durchgeführt werden.

Das erfindungsgemäße Verfahren kann man bei Normaldruck durchführen.

Das Mischen des Mercaptosilans der allgemeinen Formel I mit dem Wachs in dem ersten Schritt des erfindungsgemäßen Verfahrens kann durch ein temperierbares Knet-, Rühr- oder Mischaggregat erfolgen. Durch die Verwendung eines solchen Knet-, Rühr- oder Mischaggregates kann eine gleichmäßige Produktbewegung und -durchmischung erreicht werden.

Eine gängige Kenngröße zur Klassifizierung von handelsüblichen Mischern stellt hierbei die Froude-Zahl (Fr) dar, die das Verhältnis von Zentrifugalbeschleunigung zu Erdbeschleunigung angibt.

Neben langsam laufenden Mischern mit Fr < 1, wie z.B. Freifall- oder Schubmischer können auch schnell laufende Mischer mit Fr > 1, wie z.B. Wurfmischer, aber auch Fliehkraftmischer mit Fr >> 1 eingesetzt werden. Im Falle eines langsam laufenden Schubmischers können z.B. Trommelmischer (beispielsweise der Firma Engelsmann) oder Doppelwellenmischer (beispielsweise der Firma Gericke oder Firma Forberg) eingesetzt werden. Als schnell laufende Mischer für den Bereich Fr > 1 können z.B. Pflugscharmischer (beispielsweise der Firma Lödige) oder Vertikal-Zweiwellenmischer (beispielsweise der Firma Amixon) eingesetzt werden. Im Bereich Fr >> 1 können Fliehkraft- oder Intensivmischer (beispielsweise der Firma Eirich oder der Firma Mixaco) eingesetzt werden.

Die Temperatur bei dem Mischen kann dabei oberhalb des Erstarrungspunktes des Wachses sein. Das vorher geschmolzene Wachs kann gleich flüssig, beispielsweise mittels Düsen, in den Mischer eingebracht werden.

Das Verschließen der Kunststoffbeutel kann durch Verschweißen, Heißsiegeln, Kaltsiegeln, Ultraschallsiegeln oder Verschließen mit Verschlussclip (z.B. aus Kunststoff) erfolgen.

Die erfindungsgemäße Kunststoff-ummantelte Mercaptosilan-Wachs-Abmischung kann zusätzlich Füllstoffe, vorzugsweise Kieselsäuren oder Ruß, sowie weitere Kautschukhilfsstoffe, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, und/oder Hexantriol enthalten. Diese Verbindungen sind in der Kautschukindustrie bekannt. Im Speziellen können dies z.B. sein - ohne die Erfindung oder die obigen Angaben mit den folgenden Stoffen einzuschränken: substituierte Phenole, aromatische Amine z.B. Phenylendiaminderivate, sterischgehinderte Amine wie z.B. 2,2,4-trimethyl-1,2-dihydroquinoline, Metallsalze, Silane, langkettige Carbonsäuren, Fettsäuren, Zinksalze, Zinkseifen oder Harze.

Die erfindungsgemäße Kunststoff-ummantelte Mercaptosilan-Wachs-Abmischung kann als Haftvermittler zwischen anorganischen Materialien, zum Beispiel Glasfasern, Metallen, oxidischen Füllstoffen, Kieselsäuren, und organischen Polymeren, zum Beispiel Duroplasten, Thermoplasten oder Elastomeren beziehungsweise als Vernetzungsmittel und Oberflächenmodifizierungsmittel verwendet werden. Die erfindungsgemäße Kunststoff-ummantelte Mercaptosilan-Wachs-Abmischung kann als Kopplungsreagenz in Kautschukmischungen, beispielsweise Reifenlaufflächen, verwendet werden.

Ein weiterer Gegenstand der Erfindung ist eine Kautschukmischung, enthaltend
(A) mindestens einen Kautschuk,
(B) mindestens einen Füllstoff, vorzugsweise gefällte Kieselsäure, und
(C) mindestens eine erfindungsgemäße Kunststoff-ummantelte Mercaptosilan-Wachs-Abmischung.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit Styrolgehalten von 1 bis 60 Gew.-%, besonders vorzugsweise 5 bis 50 Gew.-% (SBR),
- Chloropren (CR)
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR)
- Ethylen/Propylen/Dien-Copolymerisate (EPDM)
- oben genannte Kautschuke, die zusätzlich funktionelle Gruppen besitzen, wie z.B. Carboxy- , Silanol-, Amino-, Mercapto- oder Epoxygruppen, beispielsweise Epoxidierter NR, Carboxy-funktionalisierter NBR oder Silanol- (-SiOH) bzw. Siloxy-funktionalisierter (-Si-OR) SBR,
sowie Mischungen dieser Kautschuke sein.

In einer bevorzugten Ausführungsform können die Kautschuke schwefelvulkanisierbar sein. Für die Herstellung von PKW-Reifenlaufflächen können insbesondere anionisch polymerisierte L-SBR-Kautschuke (Lösungs-SBR) mit einer Glastemperatur oberhalb von -50°C sowie deren Mischungen mit Dienkautschuken eingesetzt werden. Besonders bevorzugt können L-SBR-Kautschuke, deren Butadienteil einen Vinylanteil von über 20 Gew.-% aufweisen, eingesetzt werden. Ganz besonders bevorzugt können L-SBR-Kautschuke, deren Butadienteil einen Vinylanteil von über 50 Gew.-% aufweisen, eingesetzt werden.

Bevorzugt können Mischungen der oben genannten Kautschuke, die einen L-SBR-Anteil von über 50 Gew.-%, besonders bevorzugt über 60 Gew.-%, aufweisen, eingesetzt werden.

Als Füllstoffe können für die erfindungsgemäße Kautschukmischung die folgenden Füllstoffe eingesetzt werden:
- Ruße: Die hierbei zu verwendenden Ruße sind nach dem Flammruß-, Furnace-, Gasruß oder Thermal-Verfahren hergestellt und besitzen BET-Oberflächen von 20 bis 200 m²/g. Die Ruße können gegebenenfalls auch Heteroatome wie zum Beispiel Si enthalten.
- Amorphe Kieselsäuren, hergestellt zum Beispiel durch Fällung von Lösungen von Silikaten oder Flammenhydrolyse von Siliciumhalogeniden mit spezifischen Oberflächen von 5 - 1000 m²/g, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate, wie Magnesiumsilikat oder Calciumsilikat, mit BET-Oberflächen von 20 bis 400 m²/g und Primärteilchendurchmessern von 10 bis 400 nm.
- Synthetische oder natürliche Aluminiumoxide und - hydroxide
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 m²/g, besonders bevorzugt 100 m²/g bis 250 m²/g, in Mengen von 5 bis 150 Gew.-Teilen, jeweils bezogen auf 100 Teile Kautschuk, eingesetzt werden.

Die genannten Füllstoffe können alleine oder im Gemisch eingesetzt werden.

Die Kautschukmischung kann 5 bis 150 Gew.-Teile Füllstoff (B) und 0,1 bis 35 Gew.-Teile, bevorzugt 2 bis 20 Gew.-Teile, besonders bevorzugt 5 bis 20 Gew.-Teile, erfindungsgemäße Kunststoff-ummantelte Mercaptosilan-Wachs-Abmischung (C), enthalten, wobei die Gew.-Teile auf 100 Gew.-Teile Kautschuk bezogen sind.

Die Kautschukmischung kann zusätzlich Silikonöl und/oder Alkylsilan enthalten.

Die erfindungsgemäße Kautschukmischung kann weitere bekannte Kautschukhilfsmittel, wie zum Beispiel Vernetzer, Vulkisationsbeschleuniger, Reaktionsbeschleuniger, - verzögerer, Alterungsschutzmittel, Stabilisatoren, Verarbeitungshilfsmittel, Weichmacher, Wachse oder Metalloxide enthalten, sowie ggf. Aktivatoren, wie Triethanolamin, Polyethylenglykol oder Hexantriol.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 Gew.-%, bezogen auf Kautschuk, sein. Als Vernetzer können Schwefel oder organische Schwefelspender eingesetzt werden.

Die erfindungsgemäße Kautschukmischung kann weitere Vulkanisationsbeschleuniger enthalten. Beispielsweise können als geeignete Vulkanisationsbeschleuniger Mercaptobenzthiazole, Sulfenamide, Guanidine, Dithiocarbamate, Thioharnstoffe, Thiocarbonate sowie deren Zinksalze, wie z.B. Zinkdibutyldithiocarbamat, eingesetzt werden.

Die erfindungsgemäße Kautschukmischung kann bevorzugt zusätzlich
(D) ein Thiuramsulfid- und/oder Carbamatbeschleuniger und/oder die entsprechenden Zinksalze,
(E) ein stickstoffhaltigen Co-Aktivator,
(F) gegebenenfalls weitere Kautschukhilfsmittel und
(G) gegebenenfalls weitere Beschleuniger
enthalten, wobei das Gewichtsverhältnis Beschleuniger (D) zu stickstoffhaltigem Co-Aktivator (E) gleich oder größer 1 ist.

Die erfindungsgemäße Kautschukmischung kann (D) Tetrabenzylthiuramdisulfid oder Tetramethylthiuramdisulfid mit mindestens 0,25 Gewichtsteilen, bezogen auf 100 Gewichtsteile Kautschuk, (E) Diphenylguanidin mit maximal 0,25 Gewichtsteile, bezogen auf 100 Gewichtsteile Kautschuk, und (G) Cyclohexyl- oder Dicyclohexylsulfenamid mit mehr Gewichtsteilen als (D) enthalten.

Bevorzugt können Sulfenamide zusammen mit Guanidinen und Thiuramen, besonders bevorzugt Cyclohexylsulfenamid oder Dicylohexylsulfenamid zusammen mit Diphenylguanidin und Tetrabenzylthiuramdisulfid oder Tetramethylthiuramdisulfid, eingesetzt werden.

Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden. Besonders bevorzugt können Schwefel und Sulfenamide in Mengen von 1 bis 4 Gew.-%, Thiurame in Mengen von 0,2 bis 1 Gew.-% und Guanidine in Mengen von 0 bis 0,5 Gew.-% eingesetzt werden.

Die erfindungsgemäßen Kautschukmischungen können hergestellt werden, indem man mindestens einen Kautschuk (A), mindestens einen Füllstoff (B), mindestens eine erfindungsgemäße Kunststoff-ummantelte Mercaptosilan-Wachs-Abmischung (C) und gegebenenfalls weitere Kautschukhilfsmittel in einem Mischaggregat mischt.

Die Abmischung der Kautschuke mit dem Füllstoff, gegebenenfalls Kautschukhilfsmitteln und der erfindungsgemäßen Kunststoff-ummantelten Mercaptosilan-Wachs-Abmischung kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die erfindungsgemäße Kunststoff-ummantelte Mercaptosilan-Wachs-Abmischung und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110°C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischung kann bei Temperaturen von 80 bis 200°C, bevorzugt 110 bis 180°C, gegebenenfalls unter Druck von 10 bis 200 bar erfolgen.

Die erfindungsgemäße Kautschukmischung kann zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Aus den erfindungsgemäßen Kautschukmischungen können Formköper durch Vulkanisation hergestellt werden.

Die erfindungsgemäße Kunststoff-ummantelte Mercaptosilan-Wachs-Abmischung hat den Vorteil, dass auch bei längerer Lagerzeit sich der Monomergehalt des Mercaptosilans nicht signifikant verändert.

Ein weiterer Vorteil ist die gute Verarbeitbarkeit und das Handling.

### Beispiele:

Das in den Beispielen eingesetzte VP Si 363 ist ein Silan der Formel (R¹) (R²) ₂Si(CH₂)₃-SH mit R¹ = -O(C₂H₄O)₅-C₁₃H₂₇ und R² = OC₂H₅ oder R¹

### Beispiel 1: (Lagerstabilität von Kunststoffbeutel mit und ohne Wachs)

### Vergleichsbeispiel 1:

1. Flachbeutel aus reinem LDPE, Maße: 170 mm x 300 mm (LxB), Stärke: 100 µm von neoLab Migge Laborbedarf-Vertriebs GmbH, Deutschland.
2. Silan VP Si 363 der Firma Evonik Industries AG.

500 g VP Si 363 wird unter Inertbedingungen (Glovebox MB 150-GII der Firma MBraun Inertgas-Systeme GmbH, Deutschland in Polymerflachbeutel eingefüllt und mit einem handelsüblichen Folienschweißgerät der Firma Braukmann GmbH, Deutschland (Caso® Vakuumierer VC10) verschweißt.

### Erfindungsgemäßes Beispiel 1:

1. Flachbeutel aus reinem LDPE, Maße: 170 mm x 300 mm (LxB), Stärke: 100 µm von neoLab Migge Laborbedarf-Vertriebs GmbH, Deutschland.
2. Protektor G3108 von Paramelt (Zusammensetzung: Mischung von raffinierten Kohlenwasserstoffwachsen, Erstarrungspunkt ≈ 57°C, relative Dichte ≈ 0,89 - 0,96 g/cm³ (20°C), Viskosität ≈ 4 mPas (100°C).
3. Silan VP Si 363 der Firma Evonik Industries AG.

Die Herstellung der Mercaptosilan-Wachs-Mischung erfolgt durch Aufschmelzen von Protektor G3108 in Gegenwart von VP Si 363 im Gewichtsverhältnis 1:5 im 1000 mL Becherglas auf einer Heizplatte mit Rührmotor bei 65°C unter Inertbedingungen (Glovebox der Firma MBraun Inertgas-Systeme GmbH, Deutschland (MB 150-GII)). 500 g der flüssigen, homogenen, warmen, physikalischen Mischung aus Protektor G3108 und VP Si 363 wird anschließend unter Inertbedingungen (Glovebox der Firma MBraun Inertgas-Systeme GmbH, Deutschland (MB 150-GII) in Polymerflachbeutel eingefüllt und mit einem handelsüblichen Folienschweißgerät der Firma Braukmann GmbH, Deutschland (Caso® Vakuumierer VC10) verschweißt und bei Raumtemperatur zur Aushärtung abkühlen gelassen.

Die Proben werden 3 Monate bei 23°C und 50% Luftfeuchtigkeit in Aluminiumschalen offen gelagert.

Die Lagerstabilität der Proben wird anhand des verbleibenden VP Si 363-Monomergehalts im Vergleich zu oligomeren Strukturen mittels ²⁹Si NMR-Messungen bewertet. Die Ergebnisse sind in Tabelle 1 dargestellt.

Das ²⁹Si-NMR wird an einem 500 MHz "Bruker Avance 500" der Firma Bruker mit stickstoffgekühltem Cryokopf gemessen (ca. 2000 scans). Für die Probenpräparation der Silan/Wachsabmischung werden ca. 0,5 g der Probe in ein Kulturröhrchen mit Schraubverschluß der Firma Brand gegeben, 3 - 4 mL CDCl₃ und Cr(acac)₃ hinzugefügt und dreimal für 15 Minuten im Ultraschallbad Panasonic 470/H behandelt. Anschließend wird zentrifugiert und zusätzlich filtriert. Von der Lösung wird dann ein NMR-Spektrum aufgenommen.

**Tabelle 1:**

| | Monomergehalt mol% vor Lagerung | Monomergehalt mol% nach Lagerung |
|---|---|---|
| Vergleichsbeispiel 1 | 99 | 73 |
| Erfindungsgemäßes Beispiel 1 | 97 | 96 |

Die Alterungseffekte werden durch die Kombination von LDPE-Folie und Protektor Wachs im Vergleich zum wachsfreien Vergleichsbeispiel 1 stark unterdrückt.

### Beispiel 2: (Lagerstabilität mit Wachs mit und ohne Folie; Vergleich der Folienstärken)

### Vergleichsbeispiel 2:

### Einsatzmaterialien:

1. FLB Flachbeutel von Polymersynthesewerk GmbH, Schmelztemperatur: 104°C, Stärke: 60 µm.
   Rohstoff: Exxonmobil LD 362 BR hergestellt von A. Schulman GmbH basiert auf einem LDPE/EVA-Copolymer (Vinylacetatgehalt: 4,5 Gew.-%, Dichte: 0,928 g/cm³, Schmelze-Massefließrate (190°C/2,16 kg): 2,0 g/10min).
2. Protektor G3108 von Paramelt (Zusammensetzung: Mischung von raffinierten Kohlenwasserstoffwachsen, Erstarrungspunkt ≈ 57°C, relative Dichte ≈ 0,89 - 0,96 g/cm³ (20°C), Viskosität ≈ 4 mPas (100°C).
3. Silan VP Si 363 der Firma Evonik Industries AG.

Die Herstellung der Mischungen erfolgt durch gemeinsames Aufschmelzen von Protektor G3108 und VP Si 363 im Gewichtsverhältnis 1:5 im 1000 mL Becherglas auf einer Heizplatte mit Rührmotor bei 65°C unter Inertbedingungen (Glovebox der Firma MBraun Inertgas-Systeme GmbH, Deutschland (MB 150-GII)). 500 g der flüssigen, homogenen, warmen, physikalischen Mischung aus Protektor G3108 und VP Si 363 wird anschließend unter Inertbedingungen (Glovebox der Firma MBraun Inertgas-Systeme GmbH, Deutschland (MB 150-GII) in Polymerflachbeutel eingefüllt und mit einem handelsüblichen Folienschweißgerät der Firma Braukmann GmbH, Deutschland (Caso® Vakuumierer VC10) verschweißt und bei Raumtemperatur zur Aushärtung abkühlen gelassen. Der Beutel wird vor der Lagerungsstudie entfernt.

### Vergleichsbeispiel 3:

### Einsatzmaterialien:

1. FLB Flachbeutel von Polymersynthesewerk GmbH, Schmelztemperatur: 104°C, Stärke: 60 µm
   Rohstoff: Exxonmobil LD 362 BR hergestellt von A. Schulman GmbH basiert auf einem LDPE/EVA-Copolymer (Vinylacetatgehalt: 4,5 Gew.-%, Dichte: 0,928 g/cm³, Schmelze-Massefließrate (190°C/2,16 kg): 2,0 g/10min)
2. Protektor G3108 von Paramelt (Zusammensetzung: Mischung von raffinierten Kohlenwasserstoffwachsen, Erstarrungspunkt ≈ 57°C, relative Dichte ≈ 0,89 - 0,96 g/cm³ (20°C), Viskosität ≈ 4 mPas (100°C).
3. Silan VP Si 363 der Firma Evonik Industries AG.

Die Herstellung der Mischungen erfolgt durch gemeinsames Aufschmelzen von Protektor G3108 und VP Si 363 im Gewichtsverhältnis 1:5 im 1000 mL Becherglas auf einer Heizplatte mit Rührmotor bei 65°C unter Inertbedingungen (Glovebox der Firma MBraun Inertgas-Systeme GmbH, Deutschland (MB 150-GII)). 500 g der flüssigen, homogenen, warmen, physikalischen Mischung aus Protektor G3108 und VP Si 363 wird anschließend unter Inertbedingungen (Glovebox der Firma MBraun Inertgas-Systeme GmbH, Deutschland (MB 150-GII) in Polymerflachbeutel eingefüllt und mit einem handelsüblichen Folienschweißgerät der Firma Braukmann GmbH, Deutschland (Caso® Vakuumierer VC10) verschweißt und bei Raumtemperatur zur Aushärtung abkühlen gelassen.

### Vergleichsbeispiel 4:

Herstellung des Vergleichsbeispiels gemäß der erfindungsgemäßen Mercaptosilan-Ruß-Abmischung in Beispiel 1 aus WO2013149790.

### Erfindungsgemäßes Beispiel 2:

### Einsatzmaterialien:

1. FLB Flachbeutel Antist/Slip/EVA von Polymersynthesewerk GmbH, Antiblock: 1000 ppm, Slip: 750 ppm, thermische Stabilisatoren, Maße: 600 mm x 900 mm (B x L), Schmelztemperatur: 104°C, reines Metergewicht: 167 g, Stärke: 150 µm
   Rohstoff: Exxonmobil LD 362 BR hergestellt von A. Schulman GmbH basiert auf einem LDPE/EVA-Copolymer (Vinylacetatgehalt: 4,5 Gew.-%, Dichte: 0,928 g/cm³, Schmelze-Massefließrate (190°C/2,16 kg): 2,0 g/10min)
   Additiv (Antistatikum): Polybatch VLA 55 hergestellt von A. Schulman GmbH (Additivgehalt: 5 Gew.-%, Trägermaterial: PE, Schmelze-Massefließrate: 20 g/10min, Dichte: 0,96 g/cm³, Schüttgewicht: 550 g/l, Feuchtigkeitsgehalt: < 1500 ppm.
2. Wachs: Protektor G3108 von Paramelt (Zusammensetzung: Mischung von raffinierten Kohlenwasserstoffwachsen, Erstarrungspunkt ≈ 57°C, relative Dichte ≈ 0,89 - 0,96 g/cm³ (20°C), Viskosität ≈ 4 mPas (100°C))
3. Silan VP Si 363 der Firma Evonik Industries AG.

Die Herstellung der Mischungen erfolgt durch gemeinsames Aufschmelzen von Protektor G3108 und VP Si 363 im Gewichtsverhältnis 1:5 im 1000 mL Becherglas auf einer Heizplatte mit Rührmotor bei 65°C unter Inertbedingungen (Glovebox der Firma MBraun Inertgas-Systeme GmbH, Deutschland (MB 150-GII)). 500 g der flüssigen, homogenen, warmen, physikalischen Mischung aus Protektor G3108 und VP Si 363 wird anschließend unter Inertbedingungen (Glovebox der Firma MBraun Inertgas-Systeme GmbH, Deutschland (MB 150-GII) in Polymerflachbeutel eingefüllt und mit einem handelsüblichen Folienschweißgerät der Firma Braukmann GmbH, Deutschland (Caso® Vakuumierer VC10) verschweißt und bei Raumtemperatur zur Aushärtung abkühlen gelassen.

### Erfindungsgemäßes Beispiel 3:

### Einsatzmaterialien:

1. FLB Flachbeutel Antist/Slip/EVA von Polymersynthesewerk GmbH, Antiblock: 1000 ppm, Slip: 750 ppm, thermische Stabilisatoren, Maße: 600 mm x 900 mm (B x L), Schmelztemperatur: 104°C, reines Metergewicht: 167 g, Stärke: 150 µm
   Rohstoff: Exxonmobil LD 362 BR hergestellt von A. Schulman GmbH basiert auf einem LDPE EVA Copolymer (Vinylacetatgehalt: 4,5 Gew.-%, Dichte: 0,928 g/cm³, Schmelze-Massefließrate: 2,0 g/10min)
   Additiv (Antistatikum): Polybatch VLA 55 hergestellt von A. Schulman GmbH (Additivgehalt: 5 Gew.-%, Trägermaterial: PE, Schmelze-Massefließrate: 20 g/10min, Dichte: 0,96 g/cm³, Schüttgewicht: 550 g/l, Feuchtigkeitsgehalt: < 1500 ppm.
2. Wachs: Varazon 5998 von Sasol (Zusammensetzung: Mischung aus Paraffinwachsen und Kohlenwasserstoffwachsen 50 - 100%, Erstarrungsbereich ≈ 64 - 68°C).
3. Silan VP Si 363 der Firma Evonik Industries AG.

Die Herstellung der Mischungen erfolgt durch gemeinsames Aufschmelzen von Varazon 5998 und VP Si 363 im Gewichtsverhältnis 1:5 im 1000 mL Becherglas auf einer Heizplatte mit Rührmotor bei 75°C unter Inertbedingungen (Glovebox der Firma MBraun Inertgas-Systeme GmbH, Deutschland (MB 150-GII)). 500 g der flüssigen, homogenen, warmen, physikalischen Mischung aus Varazon 5998 und VP Si 363 wird anschließend unter Inertbedingungen (Glovebox der Firma MBraun Inertgas-Systeme GmbH, Deutschland (MB 150-GII) in Polymerflachbeutel eingefüllt und mit einem handelsüblichen Folienschweißgerät der Firma Braukmann GmbH, Deutschland (Caso® Vakuumierer VC10) verschweißt und bei Raumtemperatur zur Aushärtung abkühlen gelassen.

Die Proben werden zur beschleunigten Alterung für 7 Tage bei 60°C offen in Aluminiumschalen im Trockenschrank gelagert.

Die Lagerstabilität der Proben werden anhand des verbleibenden VP Si 363-Monomergehalts im Vergleich zu oligomeren Strukturen mittels ²⁹Si NMR-Messungen bewertet. Die Ergebnisse sind in Tabelle 2 dargestellt.

Das ²⁹Si-NMR wird an einem 500 MHz "Bruker Avance 500" der Firma Bruker mit stickstoffgekühltem Cryokopf gemessen (ca. 2000 scans). Für die Probenpräparation der Silan/Wachsabmischung bzw. Silan/Ruß-Abmischung werden ca. 0,5 g der Probe in ein Kulturröhrchen mit Schraubverschluß der Firma Brand gegeben, 3-4 mL CDCl₃ und Cr(acac)₃ hinzugefügt und dreimal für 15 Minuten im Ultraschallbad Panasonic 470/H behandelt. Anschließend wird zentrifugiert und zusätzlich filtriert. Von der Lösung wird dann ein NMR-Spektrum aufgenommen.

**Tabelle 2:**

| | Monomergehalt mol% vor Lagerung | Monomergehalt mol% nach Lagerung |
|---|---|---|
| Vergleichsbeispiel 2 | 97 | 87 |
| Vergleichsbeispiel 3 | 97 | Beutel instabil |
| Vergleichsbeispiel 4 | 98 | < 5% |
| Erfindungsgemäßes Beispiel 2 | 97 | 95 |
| Erfindungsgemäßes Beispiel 3 | 97 | 96 |

Die Ergebnisse zeigen, dass der Beutel die Lagerstabilität gegenüber den reinen Wachs-Silan-Abmischungen deutlich erhöht. Die erfinderischen Beispiele 2 und 3 mit Folienstärken von 150 µm führen zu einer höheren Stabilität im Vergleich zu Vergleichsbeispiel 3, bei dem der Beutel während der Lagerung aufgeplatzt ist. Auch im Vergleich zum rußbasierten Vergleichsbeispiel 4 ist die Lagerstabilität signifikant verbessert.

### Beispiel 3:(Vergleich Ruß und Wachs/Beutel als Träger)

Die für die Kautschukmischungen verwendete Rezeptur ist in der folgenden Tabelle 3 angegeben. Dabei bedeutet die Einheit phr Gewichtsanteile bezogen auf 100 Teile des eingesetzten Rohkautschuks. Das Silan VP Si 363 wird in den Kautschukmischungen jeweils äquimolar eingesetzt.

**Tabelle 3:**

| Substanz | Menge [phr] | Menge [phr] | Menge [phr] |
|---|---|---|---|
| 1. Stufe | Ref. Kautschukmischung I | Ref. Kautschukmischung II, | Erf. Kautschuk- Mischung III, |
| Buna VSL 5025-2 | 96,25 | 96,25 | 96,25 |
| Buna CB 24 | 30 | 30 | 30 |
| ULTRASIL 7000 GR | 80 | 80 | 80 |
| Corax N 330 | 5 | - | 5 |
| ZnO RS | 2 | 2 | 2 |
| Edenor ST1 | 1 | 1 | 1 |
| Vivatec 500 | 8,75 | 8,75 | 8,75 |
| Protector G 3108 | 2 | 2 | 2 |
| Vulkanox-4020/LG | 2 | 2 | 2 |
| Vulkanox-HS/LG | 1,5 | 1,5 | 1,5 |
| VP Si 363® | 9 | - | - |
| Vergleichsbeisp. 4 | - | 18 | - |
| Erfindungsgemäßes Beisp. 3 | - | - | 10,80 |
| 2. Stufe | | | |
| Batch Stufe 1 | | | |
| 3. Stufe | | | |
| Batch Stufe 2 | | | |
| Perkacit TBzTD | 0,4 | 0,4 | 0,4 |
| Vulkacit CZ/EG-C | 1,6 | 1,6 | 1,6 |
| Schwefel | 2,0 | 2,0 | 2,0 |

Bei dem Polymer VSL 5025-2 handelt es sich um ein in Lösung polymerisiertes SBR-Copolymer der Lanxess AG, mit einem Styrolgehalt von 25 Gew.-% und einem Vinylanteil von 50 Gew.-%. Das Copolymer enthält 37,5 phr TDAE-Öl und weist eine Mooney-Viskosität (ML 1+4/100°C) von 47 ME auf.

Bei dem Polymer Buna CB 24 handelt es sich um ein hoch cis-1,4-Polybutadien (Neodymtyp) der Lanxess AG, mit cis-1,4-Gehalt von mindestens 96 % und einer Mooney-Viskosität von 44 ± 5 ME.

ULTRASIL 7000 GR ist eine leicht dispergierbare Kieselsäure der Evonik Industries AG und besitzt eine BET-Oberfläche von 170 m²/g.

Der Ruß Corax N 330 ist von Orion Engineered Carbons GmbH. Als TDAE Öl wird Vivatec 500 der H&R AG verwendet, bei Vulkanox 4020/LG handelt es sich um 6PPD der Rhein Chemie Rheinau GmbH, bei Vulkanox HS/LG um TMQ der Rhein Chemie Rheinau GmbH und Protektor G3108 ist ein Ozonschutzwachs der Paramelt B.V., bei ZnO RS handelt es sich um ZnO der Arnsperger Chemikalien GmbH, bei EDENOR ST1 GS 2.0 um Palmitin-Stearinsäure der Caldic Deutschland Chemie B.V. und Vulkacit CZ/EG-C ist CBS von der Chemie Rheinau GmbH. TBzTD wurde bezogen über Weber & Schaer (Hersteller: Dalian Richon) bezogen.

Die Mischungen werden dreistufig in einem 1,5 l Innenmischer (E-Typ) bei einer Batch-Temperatur von 155°C gemäß der in Tabelle 4 beschriebenen Mischvorschrift hergestellt.

**Tabelle 4**

| | Stufe 1 |
|---|---|
| Einstellungen | |
| Mischaggregat | Von HF Mixing Group GmbH; Typ GK 1,5 E |
| Füllgrad | 0, 65 |
| Drehzahl | 70 min⁻¹ |
| Stempeldruck | 5,5 bar |
| Durchflußtemp. | 70°C |
| Mischvorgang | |
| 0 bis 0,5 min | Buna VSL 5025-2 + Buna CB 24 |
| 0,5 min | TMQ, 6PPD |
| 0,5 bis 1 min | Mischen |
| 1 bis 2 min | ½ ULTRASIL 7000 GR, Silan bzw. Silan auf HS 45 bzw. Kunststoff-ummantelte Mercaptosilan-Wachs-Abmischung, ZnO, Stearinsäure |
| 2 min | Säubern und lüften |
| 2 bis 3 | Ruß, Vivatec 500, ½ ULTRASIL 7000 GR, Protector G3108 |
| 3 min | Säubern und lüften |
| 3 bis 5 min | Mischen bei 155°C |
| 5 min | ausfahren und auf Labormischwalzwerk 45 s ein Fell bilden |
| | (Laborwalzwerk: Durchmesser 250 mm, Länge 190 mm, Walzenspalt 4 mm, Durchflußtemperatur 60°C) |
| | 24 h Lagerung bei Raumtemperatur |

| | Stufe 2 |
|---|---|
| Einstellungen | |
| Mischaggregat | wie in Stufe 1 bis auf |
| Füllgrad | 0, 62 |
| Mischvorgang | |
| 0 bis 0.5 min | Batch Stufe 1 aufbrechen |
| 0.5 bis 3 min | Mischen bei 155°C |
| 3 min | ausfahren und auf Labormischwalzwerk 45 s ein Fell bilden |
| | (Laborwalzwerk: Durchmesser 250 mm, Länge 190 mm, Walzenspalt 4 mm, Durchflußtemperatur 60°C) |
| | 4 h Lagerung bei Raumtemperatur |
| | |

| | Stufe 3 |
|---|---|
| Einstellungen | |
| Mischaggregat | wie in Stufe 1 bis auf |
| Füllgrad | 0,59 |
| Drehzahl | 50 min⁻¹ |
| Durchflußtemp. | 50°C |
| Mischvorgang | |
| 0 bis 0,5 min | Batch Stufe 2 aufbrechen |
| 0,5 bis 2 min | Beschleuniger und Schwefel, mischen bei 100°C |
| 2 min | ausfahren und auf Labormischwalzwerk 20 s ein Fell bilden, innerhalb von weiteren 40s: 3* links, 3* rechts einschneiden und umklappen sowie 3* bei engem Walzenspalt (3 mm) stürzen und anschließend ein Fell ausziehen. |
| | (Laborwalzwerk: Durchmesser 250 mm, Länge 190 mm, Walzenspalt 3-4 mm, Durchflußtemperatur 80°C) |
| Batch-Temp. | 100°C |

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgt gemäß den in Tabelle 5 angegebenen Prüfmethoden.

Die Vulkanisation erfolgt bei einer Temperatur von 165°C und einer Dauer von 8 Minuten in einer typischen Vulkanisationspresse mit einem Haltedruck von 120 bar. In der Tabelle 6 sind die gummitechnischen Daten für Rohmischung und Vulkanisat angegeben.

**Tabelle 5:**

| Physikalische Testung | Norm/Bedingungen |
|---|---|
| Mooney Viskosität ML 1+4 bei 100°C ISO 289-1 | |
| *Mooney Viskosität* / *ME* | |
| Rheovulkametermessungen bei 100°C | |
| *Volumen nach 30 s*/*mm³* | Rheo-Vulkameter 78.90 (Göttfert Werkstoff-Prüfmaschinen GmbH) Düse 2 mm x 10 mm Prüfdruck 40 bar, Vorwärmzeit 60 s |
| *Scheinbbare* | |
| *Schergeschwindigkeit* / *s⁻¹* | |
| *Scheinbare Viskosität* / *Pa s* | |
| Zugversuch am Stab bei 23°C | ISO 37 |
| *Verstärkungsindex Modul* 300*%* / *Modul 50*% | |
| Shore A Härte bei 23°C | ISO 7619-1 |
| *Shore A Härte* / *SH* | |
| Ball Rebound 23°C und 70°C | DIN EN ISO 8307 |
| *Rückprallelastizität* / *%* | Fallhöhe 500 mm, Stahlkugel d = 19 mm, 28 g |
| Viskoelastische Eigenschaften des Vulkanisats bei 60°C | Rubber Process Analyzer RPA 2000 (Alpha Technologies), Strain Sweep, 1.7 Hz, 0.28% - 42% Dehnung; |
| | sh."Operators Manual RPA 2000" von Alpha Technologies, February 1997 |
| *Maximaler Verlustfaktor tan δ* | |
| Viskoelastische Eigenschaften bei 60°C | ISO 4664-1 16 Hz, 50 N Vorkraft und 25 N Amplitudenkraft, 5 min Temperierzeit, Meßwertaufnahme nach 30 s Prüfzeit |
| *Verlustfaktor tan δ* | |

**Tabelle 6:**

| | Ref. Kautschukmischung I | Ref. Kautschukmischung II, | Erf. Kautschukmischung III, |
|---|---|---|---|
| Rohmischungsergebnisse: | | | |
| Mooney Viskosität ML 1+4 bei 100°C | | | |
| *Mooney Viskosität* / *ME* | | | |
| *1. Stufe* | 129 | 129 | 120 |
| *2. Stufe* | 80 | 82 | 78 |
| *3. Stufe* | 54 | 55 | 53 |
| Rheovulkametermessungen bei 100°C | | | |
| *Volumen nach 30 slmm³* | | | |
| *1. Stufe* | 413 | 548 | 577 |
| *2. Stufe* | 1067 | 1010 | 1125 |
| *3. Stufe* | 2058 | 1933 | 2201 |
| *Scheinbbare Schergeschwindigkeit* / *s⁻¹* | | | |
| *1. Stufe* | 18.2 | 24.6 | 26.5 |
| *2. Stufe* | 47.4 | 45.0 | 49.2 |
| *3. Stufe* | 91.1 | 82.9 | 95.1 |
| *Scheinbare Viskosität* / *Pa s* | | | |
| *1. Stufe* | 16234 | 12021 | 11141 |
| *2. Stufe* | 6229 | 6570 | 6010 |
| *3. Stufe* | 3244 | 3564 | 3106 |

| Vulkanisatergebnisse: | | | |
|---|---|---|---|
| Zugversuch am Stab bei 23°C *Verstärkungsindex:* | | | |
| *Modul 300%* / *50%* | 10,2 | 10,5 | 11,0 |
| Shore A Härte / SH | 55 | 56 | 55 |
| Ball Rebound | | | |
| *Rückprallelastizität bei 23°C* / % | 43,6 | 43,1 | 43,4 |
| *Rückprallelastizität bei 70°C* / *%* | 72,3 | 71,5 | 74,6 |
| *Differenz: Rückprallel.70°C - Rückprallel. 23°C l %* | 28,7 | 28,4 | 31,2 |
| Viskoelastische Eigenschaften, 60°C, Rubber Process Analyzer (RPA), Strain Sweep, 1.7 Hz, 0.28% - 42% Dehnung | | | |
| Maximaler Verlustfaktor tan δ / - | 0, 116 | 0,114 | 0,104 |
| Viskoelastische Eigenschaften bei 60°C, 16 Hz, 50 N Vorkraft, 25 N Ampl.kraft | | | |
| Verlustfaktor tan δ / - | 0, 094 | 0, 093 | 0,090 |

Die erfindungsgemäße Kautschukmischung III zeigt ein verbessertes Verarbeitungsverhalten (in allen drei Mischstufen niedrigere Mooney und scheinbare Viskositäten, höhere Schergeschwindigkeiten sowie Volumina nach 30 s), ein verbessertes Verstärkungsverhalten (höherer Verstärkungsindex), einen verbesserten Rollwiderstand (geringere tan δ Werte bei 60°C, höhere Rückprallelastizität bei 60°C) und eine bessere Realisierung des Zielkonflikts zwischen Nassrutschen und Rollwiderstand (Differenz der Rückprallelastizitäten bei 70°C und bei 23°C) im Vergleich zu der Vergleichsmischung I mit reinem VP Si 363 und der Vergleichsmischung II gemäß WO2013149790.

## Patentansprüche

1. Kunststoff-ummantelte Mercaptosilan-Wachs-Abmischung, **dadurch gekennzeichnet, dass** der Kunststoff der Kunststoffummantelung ausgewählt ist aus der Gruppe Polypropylen, Polyethylen, Ethylenvinylacetat-Copolymer oder Mischungen der vorgenannten Kunststoffe mit einer Schmelztemperatur von 70 - 170°C und die Kunststoffummantelung eine Dicke von 100 - 3000 µm aufweist und die Mercaptosilan-Wachs-Abmischung mindestens ein Mercaptosilan der allgemeinen Formel I 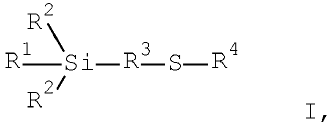
wobei R¹ eine Alkylpolyethergruppe -O-(R⁵-O)ₘ-R⁶ ist, mit R⁵ gleich oder verschieden, eine verzweigte oder unverzweigte, gesättigte oder ungesättigte, aliphatische zweibindige C1-C30 Kohlenwasserstoffgruppe, m im Mittel 1 bis 30, ist, und R⁶ aus mindestens 1 C-Atomen besteht und eine unsubstituierte oder substituierte, verzweigte oder unverzweigte einbindige Alkyl-, Alkenyl, Aryl oder Aralkylgruppe ist,
R² gleich oder verschieden und eine R¹-, C1-C12-Alkyl- oder R⁷O-Gruppe ist, mit R⁷ gleich H, Methyl, Ethyl, Propyl, C9-C30 verzweigten oder unverzweigten einbindigen Alkyl-, Alkenyl-, Aryl-, Aralkylgruppe oder (R⁸)₃Si-Gruppe, mit R⁸ gleich C1-C30 verzweigte oder unverzweigte Alkyl- oder Alkenyl-Gruppe,
R³ eine verzweigte oder unverzweigte, gesättigte oder ungesättigte, aliphatische, aromatische oder gemischt aliphatische /aromatische zweibindige C1-C30 Kohlenwasserstoffgruppe und
R⁴ gleich H, CN oder (C=O)-R⁹ ist, mit R⁹ gleich einer verzweigten oder unverzweigten, gesättigten oder ungesättigten, aliphatischen, aromatischen oder gemischt aliphatischen /aromatischen einbindigen C1-C30 Kohlenwasserstoffgruppe,
und mindestens ein Wachs mit einem Erstarrungspunkt von 30 - 160°C enthält.

2. Kunststoff-ummantelte Mercaptosilan-Wachs-Abmischung gemäß Anspruch 1, **dadurch gekennzeichnet, dass** die Kunststoffummantelung ein Kunststoffbeutel ist.

3. Kunststoff-ummantelte Mercaptosilan-Wachs-Abmischung gemäß Anspruch 1 oder 2, **dadurch gekennzeichnet, dass** die Mercaptosilan-Wachs-Abmischung ein Gemisch von Mercaptosilanen der allgemeinen Formel I enthält.

4. Kunststoff-ummantelte Mercaptosilan-Wachs-Abmischung gemäß Anspruch 3, **dadurch gekennzeichnet, dass** das Gemisch von Mercaptosilanen der allgemeinen Formel I 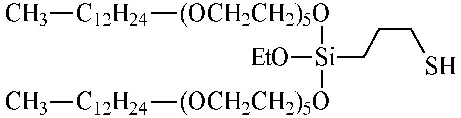 und 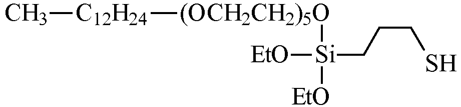 enthält.

5. Kunststoff-ummantelte Mercaptosilan-Wachs-Abmischung gemäß einem der Ansprüche 1-4, **dadurch gekennzeichnet, dass** der Kunststoff der Kunststoffummantelung eine durchschnittliche Molmasse von 50.000 - 1.000.000 g/mol hat.

6. Verfahren zur Herstellung von Kunststoff-ummantelter Mercaptosilan-Wachs-Abmischung gemäß Anspruch 1, **dadurch gekennzeichnet, dass** man in einem ersten Schritt durch Mischen von mindestens einem Mercaptosilan der allgemeinen Formel I mit mindestens einem Wachs mit einem Erstarrungspunkt von 30 - 160°C eine Mercaptosilan-Wachs-Abmischung erhält und in einem zweiten Schritt einen Kunststoffbeutel, wobei der Kunststoff des Beutels ausgewählt ist aus der Gruppe Polypropylen, Polyethylen, Ethylenvinylacetat-Copolymer oder Mischungen der vorgenannten Kunststoffe mit einer Schmelztemperatur von 70 - 170°C und die Kunststoffummantelung eine Dicke von 100 - 3000 µm aufweist, mit der Mercaptosilan-Wachs-Abmischung aus dem ersten Schritt befüllt und verschließt.

7. Verfahren zur Herstellung von Kunststoff-ummantelter Mercaptosilan-Wachs-Abmischung gemäß Anspruch 6, **dadurch gekennzeichnet, dass** man zum Mischen ein temperierbares Knet-, Rühr-, oder Mischaggregat einsetzt.

8. Verfahren zur Herstellung von Kunststoff-ummantelter Mercaptosilan-Wachs-Abmischung gemäß Anspruch 6, **dadurch gekennzeichnet, dass** man die Mercaptosilan-Wachs-Abmischung in dem ersten Schritt bei Temperaturen von 30 - 160°C herstellt.

9. Verfahren zur Herstellung von Kunststoff-ummantelter Mercaptosilan-Wachs-Abmischung gemäß Anspruch 6, **dadurch gekennzeichnet, dass** man die Befüllung des Kunststoffbeutels mit der Mercaptosilan-Wachs-Abmischung in dem zweiten Schritt bei Temperaturen von 30 - 160°C durchführt.

10. Verwendung der Kunststoff-ummantelten Mercaptosilan-Wachs-Abmischung gemäß Anspruch 1 zur Herstellung von Kautschukmischungen.

11. Kautschukmischung, **dadurch gekennzeichnet, dass** diese
(A) mindestens einen Kautschuk,
(B) mindestens einen Füllstoff und
(C) mindestens eine Kunststoff-ummantelte Mercaptosilan-Wachs-Abmischung gemäß Anspruch 1 enthält.

## Claims

1. Plastics-covered mercaptosilane-wax mixture, **characterized in that** the plastic of the plastics covering is selected from the group of polypropylene, polyethylene, ethylene-vinyl acetate copolymer and mixtures of the abovementioned plastics with melting point from 70 to 170°C, and the thickness of the plastics covering is from 100 to 3000 µm, and the mercaptosilane-wax mixture comprises at least one mercaptosilane of the general formula I 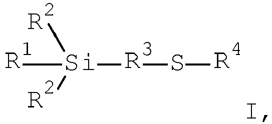
where R¹ is an alkyl polyether group -O-(R⁵-O)ₘ-R⁶, where R⁵ is identical or different and is a branched or unbranched, saturated or unsaturated, aliphatic divalent C1-C30 hydrocarbon group, m is on average from 1 to 30, and R⁶ is composed of at least 1 C atom and is an unsubstituted or substituted, branched or unbranched monovalent alkyl, alkenyl, aryl or aralkyl group,
R² is identical or different and is an R¹, C1-C12-alkyl or R⁷O group, where R⁷ is H, methyl, ethyl, propyl, C9-C30 branched or unbranched monovalent alkyl, alkenyl, aryl, or aralkyl group or (R⁸)₃Si group, where R⁸ is C1-C30 branched or unbranched alkyl or alkenyl group,
R³ is a branched or unbranched, saturated or unsaturated, aliphatic, aromatic or mixed aliphatic/aromatic divalent C1-C30 hydrocarbon group and
R⁴ is H, CN or (C=O)-R⁹, where R⁹ is a branched or unbranched, saturated or unsaturated, aliphatic, aromatic or mixed aliphatic/aromatic monovalent C1-C30 hydrocarbon group,
and at least one wax with congealing point from 30 to 160°C.

2. Plastics-covered mercaptosilane-wax mixture according to Claim 1, **characterized in that** the plastics covering is a plastics sachet.

3. Plastics-covered mercaptosilane-wax mixture according to Claim 1 or 2, **characterized in that** the mercaptosilane-wax mixture comprises a mixture of mercaptosilanes of the general formula I.

4. Plastics-covered mercaptosilane-wax mixture according to Claim 3, **characterized in that** the mixture of mercaptosilanes of the general formula (I) comprises 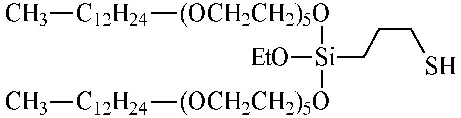 and

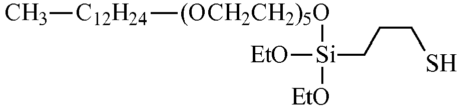

5. Plastics-covered mercaptosilane-wax mixture according to any of Claims 1-4, **characterized in that** the average molar mass of the plastic of the plastics covering is from 50 000 to 1 000 000 g/mol.

6. Process for the production of plastics-covered mercaptosilane-wax mixture according to Claim 1, **characterized in that** in a first step a mercaptosilane-wax mixture is obtained through mixing of at least one mercaptosilane of the general formula I with at least one wax with congealing point from 30 to 160 °C, and in a second step the mercaptosilane-wax mixture from the first step is charged to a plastics sachet, where the plastic of the sachet is selected from the group of polypropylene, polyethylene, ethylene-vinyl acetate copolymer and mixtures of the abovementioned plastics with melting point from 70 to 170°C, and the thickness of the plastics covering is from 100 to 3000 µm, and the plastics sachet is sealed.

7. Process for the production of plastics-covered mercaptosilane-wax mixture according to Claim 6, **characterized in that** a temperature-controllable kneading, stirring, or mixing assembly is used for the mixing process.

8. Process for the production of plastics-covered mercaptosilane-wax mixture according to Claim 6, **characterized in that** the mercaptosilane-wax mixture is produced in the first step at temperatures of from 30 to 160°C.

9. Process for the production of plastics-covered mercaptosilane-wax mixture according to Claim 6, **characterized in that** the charging of the mercaptosilane-wax mixture to the plastics sachet in the second step takes place at temperatures of from 30 to 160°C.

10. Use of the plastics-covered mercaptosilane-wax mixture according to Claim 1 for the production of rubber mixtures.

11. Rubber mixture, **characterized in that** this comprises
(A) at least one rubber,
(B) at least one filler and
(C) at least one plastics-covered mercaptosilane-wax mixture according to Claim 1.

## Revendications

1. Mélange mercaptosilane-cire sous gaine plastique, **caractérisé en ce que** le plastique de la gaine plastique est choisi dans le groupe constitué par le polypropylène, le polyéthylène, le copolymère d'éthylène-acétate de vinyle ou les mélanges des plastiques susmentionnés ayant une température de fusion de 70 à 170 °C, et la gaine plastique présente une épaisseur de 100 à 3 000 µm, et le mélange mercaptosilane-cire comprend au moins un mercaptosilane de formule générale I 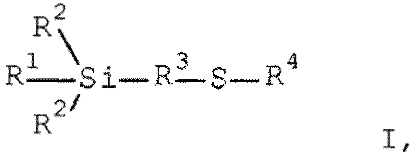
dans laquelle R¹ est un groupe alkylpolyéther -O-(R⁵-O)ₘ-R⁶, les R⁵ étant identiques ou différents, et représentant un groupe hydrocarboné en C1-C30 bivalent aliphatique, ramifié ou non ramifié, saturé ou insaturé, m valant en moyenne 1 à 30, et R⁶ étant constitué par au moins 1 atome C, et représentant un groupe alkyle, alcényle, aryle ou aralkyle monovalent non substitué ou substitué, ramifié ou non ramifié,
les R² sont identiques ou différents, et représentent un groupe R¹, alkyle en C1-C12 ou R⁷O, R⁷ représentant H, méthyle, éthyle, propyle, un groupe alkyle, alcényle, aryle, aralkyle en C9-C30 monovalent ramifié ou non ramifié, ou un groupe (R⁸)₃Si, R⁸ représentant un groupe alkyle ou alcényle en C1-C30 ramifié ou non ramifié,
R³ représente un groupe hydrocarboné bivalent en C1-C30 ramifié ou non ramifié, saturé ou insaturé, aliphatique, aromatique ou aliphatique/aromatique mixte, et
R⁴ représente H, CN ou (C=O)-R⁹, R⁹ représentant un groupe hydrocarboné monovalent en C1-C30 ramifié ou non ramifié, saturé ou insaturé, aliphatique, aromatique ou aliphatique/aromatique mixte,
et au moins une cire ayant un point de solidification de 30 à 160 °C.

2. Mélange mercaptosilane-cire sous gaine plastique selon la revendication 1, **caractérisé en ce que** la gaine plastique est une poche en plastique.

3. Mélange mercaptosilane-cire sous gaine plastique selon la revendication 1 ou 2, **caractérisé en ce que** le mélange mercaptosilane-cire contient un mélange de mercaptosilanes de formule générale I.

4. Mélange mercaptosilane-cire sous gaine plastique selon la revendication 3, **caractérisé en ce que** le mélange de mercaptosilanes de formule générale I contient 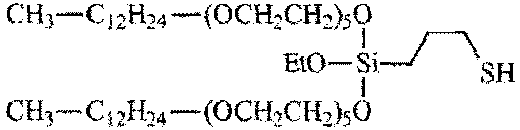 et

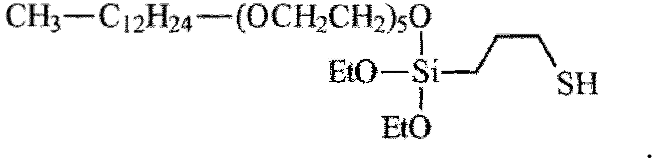

5. Mélange mercaptosilane-cire sous gaine plastique selon l'une quelconque des revendications 1 à 4, **caractérisé en ce que** le plastique de la gaine plastique a une mase molaire moyenne de 50 000 à 1 000 000 g/mol.

6. Procédé de fabrication d'un mélange mercaptosilane-cire sous gaine plastique selon la revendication 1, **caractérisé en ce que**, lors d'une première étape, un mélange mercaptosilane-cire est obtenu par mélange d'au moins un mercaptosilane de formule générale I avec au moins une cire ayant un point de solidification de 30 à 160 °C, et, lors d'une deuxième étape, une poche en plastique, le plastique de la poche étant choisi dans le groupe constitué par le polypropylène, le polyéthylène, le copolymère d'éthylène-acétate de vinyle ou les mélanges des plastiques susmentionnés ayant une température de fusion de 70 à 170 °C, et la gaine plastique présentant une épaisseur de 100 à 3 000 µm, est rempli avec le mélange mercaptosilane-cire de la première étape et fermé.

7. Procédé de fabrication d'un mélange mercaptosilane-cire sous gaine plastique selon la revendication 6, **caractérisé en ce qu'**un appareil de malaxage, d'agitation ou de mélange réglable en température est utilisé pour le mélange.

8. Procédé de fabrication d'un mélange mercaptosilane-cire sous gaine plastique selon la revendication 6, **caractérisé en ce que** le mélange mercaptosilane-cire est fabriqué lors de la première étape à des températures de 30 à 160 °C.

9. Procédé de fabrication d'un mélange mercaptosilane-cire sous gaine plastique selon la revendication 6, **caractérisé en ce que** le remplissage de la poche en plastique avec le mélange mercaptosilane-cire lors de la deuxième étape est réalisé à des températures de 30 à 160 °C.

10. Utilisation du mélange mercaptosilane-cire sous gaine plastique selon la revendication 1 pour la fabrication de mélanges de caoutchouc.

11. Mélange de caoutchouc, **caractérisé en ce que** celui-ci contient
(A) au moins un caoutchouc,
(B) au moins une charge et
(C) au moins un mélange mercaptosilane-cire sous gaine plastique selon la revendication 1.
